# EUROPÄISCHE PATENTSCHRIFT

(11) **EP 1 099 900 B1**
(45) Veröffentlichungstag und Bekanntmachung des Hinweises auf die Patenterteilung: **24.09.2003**
(21) Anmeldenummer: 00109996.9
(22) Anmeldetag: 11.05.2000
(51) Int. Cl.: F16M 11/14, F16C 11/10

(54) **Gelenkstativ**
Articulated support
Support articulé

(30) Priorität: 12.11.1999 DE 19954615
(43) Veröffentlichungstag der Anmeldung: 16.05.2001
(73) Patentinhaber: Geomed Medizin-Technik GmbH & Co., 78532 Tuttlingen (DE)
(72) Erfinder: Kräuter, Josef, 78532 Tuttlingen/Nendingen (DE)
(74) Vertreter: Manitz, Finsterwald & Partner GbR

(56) Entgegenhaltungen:
- CH-A- 608 874
- CH-A- 678 097
- DE-C- 207 363
- US-A- 4 236 844
- US-A- 4 491 435

## Beschreibung

Die Erfindung betrifft ein Gelenkstativ nach dem Oberbegriff des Patentanspruchs 1.

Ein derartiges, auch als Arm-System bezeichnetes Gelenkstativ kommt beispielsweise dort zum Einsatz, wo medizinische Operationsbereiche über ein längeren Zeitraum für den Operateur offen zu halten bzw. zugänglich zu machen sind. Hierdurch werden die Operationsassistenten entlastet und können andere Tätigkeiten ausführen. Mit besonderem Vorteil werden derartige Gelenkstative bei Hüftgelenk-, Abdominal-, Thorax-, Mammaund Femoral-Operationen eingesetzt. Sie können auch als Halterung im Endoskopie-Bereich dienen. Das Gelenkstativ wird im allgemeinen über eine Befestigungsstange und einen Befestigungskloben an einer Operationstisch-Schiene befestigt. Nach geeigneter Längsverschiebung und/oder Höhenverstellung werden Operations-Hilfsmittel, z.B. Valven oder Halterungen in der am anderen Ende des Gelenkstativs vorgesehenen vorzugsweise als Schraubzwingen-Vorrichtung ausgebildeten Aufnahmevorrichtung befestigt und durch Anziehen des Zentralgelenks über die Bewegungserzeugungsvorrichtung fixiert. Derartige Gelenkstative können auch als Halterung im Anästhesie- und Intensivpflegebereich oder im minimalinvasiven Bereich verwendet werden.

Bei einem aus der US-A-4,236,844 bekannten Gelenkstativ ist der Getriebemechanismus durch eine in einer keilförmigen Vertiefung angeordnete Kugel gebildet, welche eine axial aufgebrachte Klemmkraft in eine Verschiebung der Stoßstange umsetzt. Nachteilig an diesem bekannten Gelenkstativ ist, dass für die in dem Klemmbackenelement erzeugte Klemmkraft ein erheblicher Kraftaufwand auf Seiten der Bewegungserzeugungsvorrichtung erforderlich ist. Außerdem kann es bei einer Verringerung des Drehmomentes zwecks Lösens der Klemmbacke zu einer Selbsthemmung kommen, so dass eine Lösung der Verklemmung nicht sicher gewährleistet ist. Schließlich ist die Wegreserve des Getriebemechanismus des bekannten Gelenkstativs relativ gering. Eine weitere Ausführungsform arbeitet mit einer Federscheibe, die zentral von der Bewegungserzeugungsvorrichtung beaufschlagt wird und mit ihren Enden die Stoßstange bzw. das Gehäuse des Betätigungsblocks beaufschlagt. Hier besteht der Nachteil, dass insbesondere mit zunehmender Durchbiegung der Federscheibe erhebliche Kräfte zum Beaufschlagen der Stoßstange erforderlich sind. Eine andere Ausführungsform arbeitet mit zwei L-förmigen Hebeln, welche über zwei diametral gegenüberliegende Gelenke mit einer Halterplatte verbunden sind, die von der Bewegungserzeugungsvorrichtung beaufschlagt wird. Nachteilig ist hier, dass zwischen der Halterplatte und der Bewegungserzeugungsvorrichtung eine großflächige Berührung stattfindet, die während der Betätigung mit einer einen großen Widerstand aufweisenden hohen Flächenreibung verbunden ist.

Es ist auch schon ein mit einem einzigen Kniehebel arbeitendes Gelenkstativ bekannt geworden (CH-PS 678 097), welches den Nachteil hat, dass die von dem Kniehebel auf eine Spannhülse ausgeübte Reaktionskraft zu erheblichen Reibungskräften zwischen der Spannhülse und dem umgebenden Gehäuse führt, was zum einen eine Selbsthemmung ermöglicht und zum anderen die Betätigung des Gelenkstativs erschwert.

Das Ziel der Erfindung besteht darin, ein Gelenkstativ der eingangs genannten Gattung zu schaffen, bei dem
- eine bestimmte Klemmkraft im Klemmbackenelement mit verringertem Kraftaufwand am Betätigungsblock erzielbar ist,
- eine Selbsthemmung des Getriebemechanismus beim Nachlassen der Betätigungskraft nicht zu befürchten ist und
- eine größere Wegreserve zur Verfügung steht.

Zur Lösung dieser Aufgabe sind die Merkmale des kennzeichnenden Teils des Anspruches 1 vorgesehen.

Die Wegerzeugungsvorrichtung und der Kniehebelmechanismus sind dabei so auszubilden und anzuordnen, dass bei Einstellung des größten Weges mit der Wegerzeugungsvorrichtung der Kniehebel gerade noch nicht ganz gestreckt ist, so dass bei einem Nachlassen der Betätigungskraft eine sichere Entspannung, d.h. Überführung des Kniehebelmechanismus in eine stärker geknickte Lage, d.h. eine selbsthemmungsfreie Entklemmung gewährleistet ist.

Aufgrund des Kniehebelmechanismus steht außerdem eine größere Wegreserve zur Verfügung, wodurch eventuelle Längenänderungen der einzelnen Bauelemente durch Materialermüdung und der dadurch an sich zu befürchtende Verlust an Klemmkraft aufgefangen bzw. dem entgegengewirkt wird. Auf diese Weise werden Überholungen bzw. Reparaturen des Gelenkstativs wegen zu starker Reduzierung oder Verlust der Klemmkraft wirksam vermieden.

Aufgrund der Erfindung kann gegenüber dem Stand der Technik eine um ca. 2/3 höhere Klemmkraft bei geringerem Anzugs- bzw. Lösungsdrehmoment und gleicher Baugröße erreicht werden. Dadurch wird der Anwendungs- und Einsatzbereich des Gelenkstativs, der insbesondere in der Medizintechnik liegt, erheblich erweitert.

Insbesondere durch die Verwendung nur eines einzigen Kniegelenkes und die Ausbildung von Hohlkehlen in Kniehebelscheiben und die Anordnung von Druckrollen darin, die stets geringfügig über die zugeordneten Kniehebel etwas vorstehen, wird eine substantielle Reduzierung der Reibungskräfte zwischen Bewegungserzeugungsvorrichtung und Kniehebelanordnung bei der Betätigung erzielt, welche zur Leichtgängigkeit während der Druckbeaufschlagung und Druckentlastung herbeiführt.

Zweckmäßige praktische Weiterbildungen der Erfindung entnimmt man den Ansprüchen 2 bis 9.

Besonders vorteilhaft ist die Ausführungsform nach Anspruch 10, weil hierdurch zwei durch die Rohrverbindungselemente und den Betätigungsblock miteinander verbundene Klemmbackenelemente geschaffen werden, von denen eines beispielsweise am Operationstisch in geeigneter Weise befestigt wird, während das andere Ende die erforderlichen medizinischen Instrumente und/oder Apparate trägt.

Die beiden Gehäuse können reibend aneinander liegen und werden bei Betätigung der Bewegungserzeugungsvorrichtung mehr oder weniger gegeneinander gepresst. Eine diesbezügliche Ausbildung ist im Anspruch 11 definiert.

Besonders vorteilhaft sind jedoch die Weiterbildungen nach den Ansprüchen 12 bis 15, weil hierdurch die Reibung zwischen den beiden gegeneinander verspannten Gehäusen in gewünschter Weise erhöht werden kann. Da die durch die erfindungsgemäße Kniehebelanordnung erzielte Kraftreduzierung auch die Spannkraft zwischen den beiden aneinanderliegenden Gehäusen verringert, ist es zweckmäßig, die Reibungskräfte zwischen den beiden Gehäusen durch die diesbezüglichen Maßnahmen zu erhöhen.

Durch den Gleiteinsatz kann außerdem verhindert werden, dass Metall auf Metall reibt, wobei es eventuell zu einem Festfressen kommen könnte. Der Gleiteinsatz kann z.B. aus geeignetem Kunststoffmaterial gefertigt sein, um im Zusammenhang mit seiner speziellen Doppelverjüngungsform einerseits ein Festfressen beim relativen Verdrehen der beiden Gehäuse zu vermeiden, andererseits aber auch die erforderliche Reibungskraft zur Verfügung zu stellen, damit nach dem Verspannen der beiden Stoßstangen auch eine Relativverdrehung der beiden Gehäuse sicher vermieden wird.

Eine Weiterbildung ist durch Anspruch 16 gekennzeichnet.

Die bevorzugte Ausbildung des Verbindungselementes als Rohr entnimmt man Anspruch 17.

Um einer Relativverdrehung zwischen Druckscheibe, Gehäuse und Kniehebeln entgegenzuwirken, ist die Ausführungsform nach Anspruch 18 zweckmäßig. Zwei vorteilhafte Ausführungsformen für die Verdrehungssicherung entnimmt man dem Anspruch 19.

Eine besonders gute und reibungsarme Kraftübertragung zwischen Kniehebelmechanismus und Stoßstange wird durch die Maßnahme nach Anspruch 20 erzielt.

Eine optimale Längenanpassung der Stoßstangen an eine bestimmte Problemstellung kann gemäß Anspruch 21 auf einfache Weise erreicht werden. Zusätzlich sind verschiedene Rohrverbindungselemente verschiedener Länge zur Verfügung zu stellen.

Eine zweckmäßige Anordnung und Ausbildung der Klemmbackenelemente entnimmt man Anspruch 22.

Die Erfindung wird im folgenden beispielsweise anhand der Zeichnung beschrieben; in dieser zeigt:
- Figur 1: eine teilweise geschnittene Seitenansicht eines erfindungsgemäßen Gelenkstativs mit zwei Kniehebelmechanismen und zwei Klemmbackenelementen im entklemmten Zustand,
- Figur 1a: eine entsprechende Seitenansicht einer weiteren Ausführungsform,
- Figur 2: einen vergrößerten Ausschnitt aus Figur 1 im Bereich der oberen Hälfte des Betätigungsblocks, wobei der Kniehebelmechanismus strichpunktiert zusätzlich in der der Klemmung entsprechenden Position angedeutet ist,
- Figur 2a: einen vergrößerten Ausschnitt aus Figur 1a im Bereich der oberen Hälfte des Betätigungsblocks, wobei der Kniehebelmechanismus strichpunktiert zusätzlich in der der Klemmung entsprechenden Position angedeutet ist,
- Figur 3: eine Ansicht des mittleren Teils des Gegenstandes der Figur 1 im geklemmten Zustand,
- Figur 3a: eine Ansicht des mittleren Teils des Gegenstandes der Figur 1a im geklemmten Zustand,
- Figur 4: eine schematische Schnittansicht nach Linie IV-IV in Figur 1,
- Figur 4a: eine schematische Schnittansicht nach Linie IVa-IVa in Figur 1a,
- Figur 5: eine vergrößerte Draufsicht der durch Druckrollen verbundenen Kniehebelscheiben der Ausführungsform nach den Figuren 1, 2, 3 und 4,
- Figur 5a: eine vergrößerte Draufsicht der durch Druckrollen verbundenen Kniehebelscheiben der Ausführungsform nach den Figuren 1a, 2a, 3a und 4a,
- Figur 6: eine schematische Ansicht nach Linie VI-VI in Figur 5,
- Figur 6a: eine schematische Ansicht nach Linie VIa-VIa in Figur 5a,
- Figur 7: eine Seitenansicht der Kniehebelscheibenanordnung von Figur 5, wobei jedoch die beiden Kniehebelscheiben in relativ zueinander geknicktem Zustand gezeigt sind,
- Figur 7a: eine Seitenansicht der Kniehebelscheibenanordnung von Figur 5a, wobei jedoch die beiden Kniehebelscheiben in relativ zueinander geknicktem Zustand gezeigt sind,
- Figur 8: einen Vertikalschnitt durch eine erfindungsgemäße Druckscheibe der Ausführungsform nach den Figuren 1, 2, 3, 4, 5, 6 und 7,
- Figur 8a: einen Vertikalschnitt durch eine erfindungsgemäße Druckscheibe der Ausführungsform nach den Figuren 1a, 2a, 3a, 4a, 5a, 6a und 7a,
- Figur 9: eine Ansicht des Gegenstandes der Figur 8 von links,
- Figur 9a: eine Ansicht des Gegenstandes der Figur 8a von links,
- Figur 10: eine Schnittansicht des zur Druckscheibe nach den Figuren 8, 9 gehörenden Gehäuses mit angebautem Verbindungsrohr,
- Figur 10a: eine Schnittansicht des zur Druckscheibe nach den Figuren 8a, 9a gehörenden Gehäuses mit angebautem Verbindungsrohr,
- Figur 11: eine teilweise geschnittene Draufsicht des Gegenstandes der Figur 10,

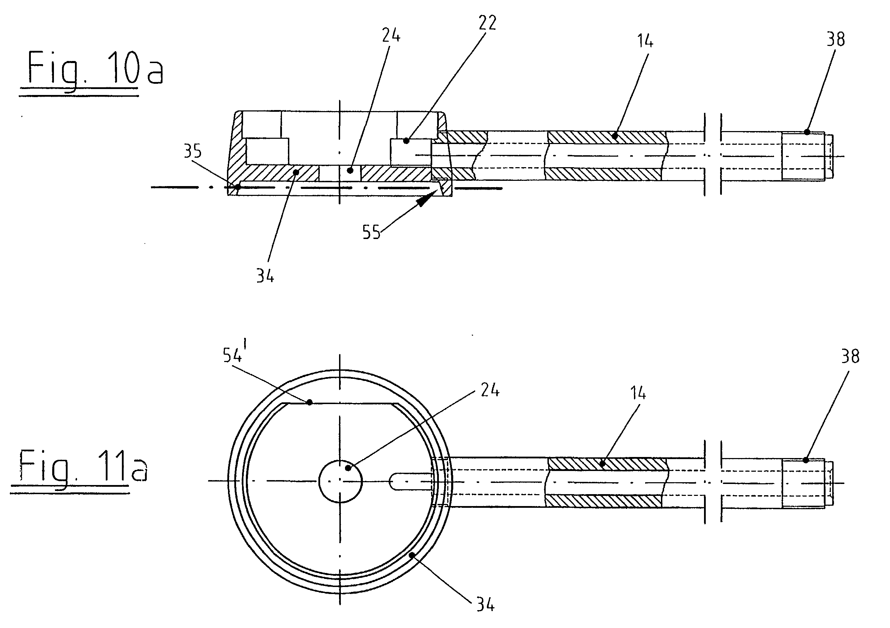

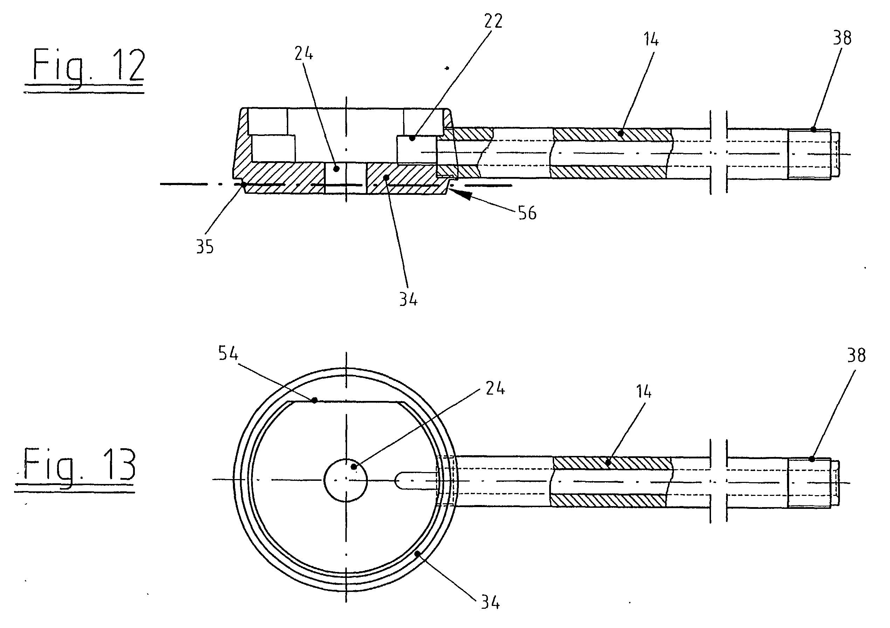

- Figur 11 a: eine teilweise geschnittene Draufsicht des Gegenstandes der Figur 10a,
- Figur 12: eine Schnittansicht des mit dem Gehäuse nach Figur 10a zusammenzubauenden unteren Gehäuseteils mit angebautem Verbindungsrohr,
- Figur 13: eine Draufsicht des Gegenstandes der Figur 12,

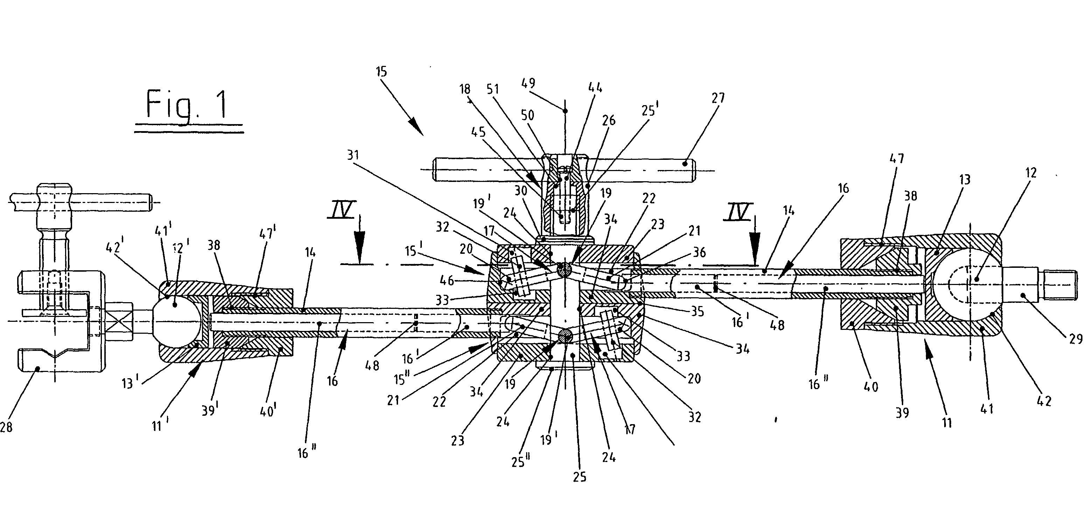

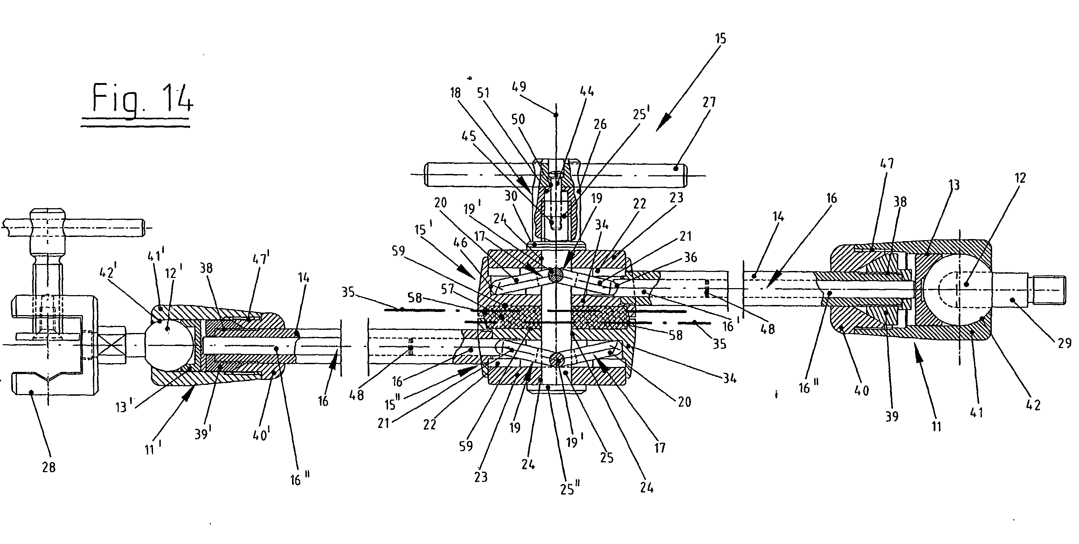

- Figur 14: eine zu den Figuren 1 und 1a analoge teilweise geschnittene Seitenansicht einer weiteren Ausführungsform des erfindungsgemäßen Gelenkstativs,

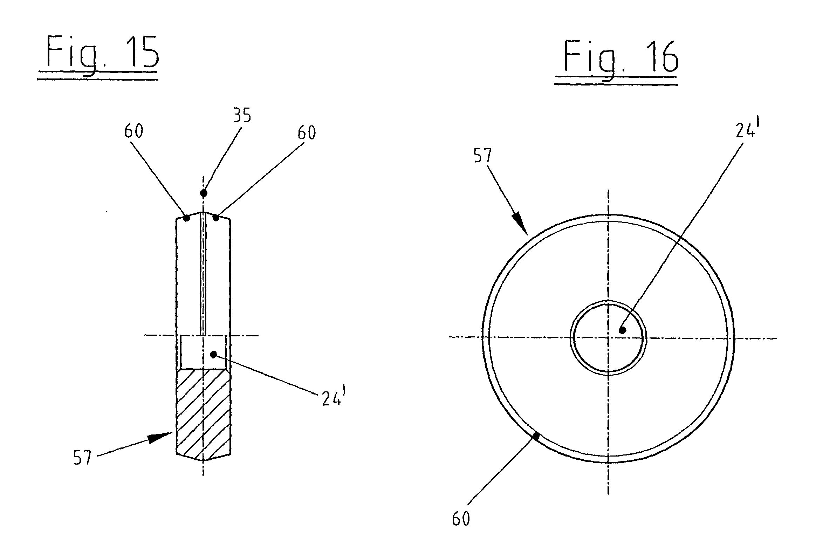

- Figur 15: eine teilweise geschnittene Seitenansicht des bei der Ausführungsform nach Figur 14 verwendeten Gleiteinsatzes,
- Figur 16: eine Ansicht des Gegenstandes der Figur 15 von links und

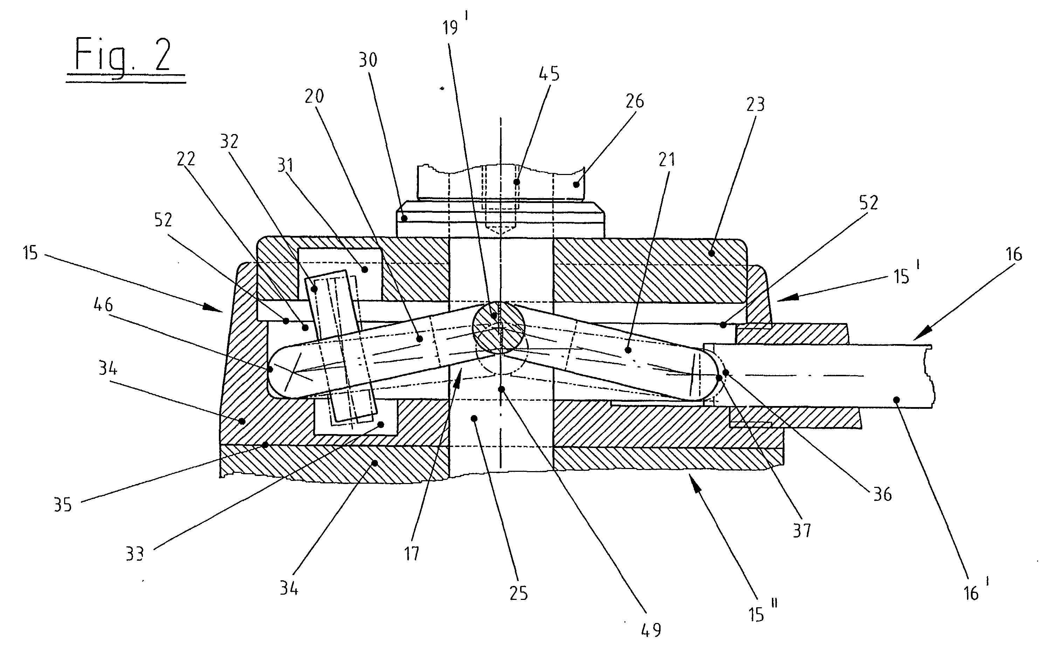

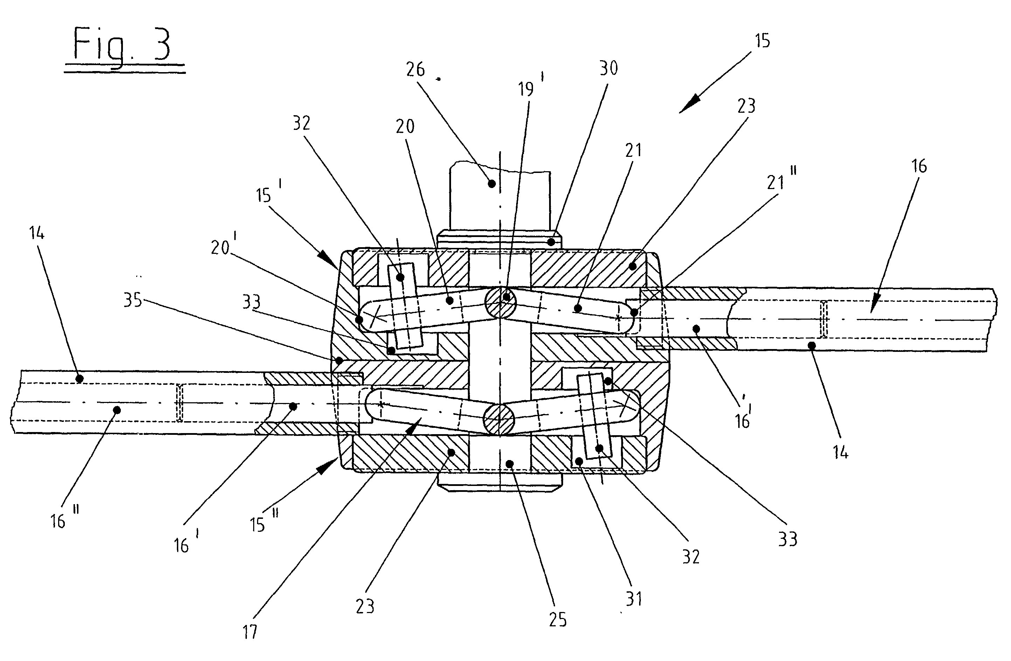

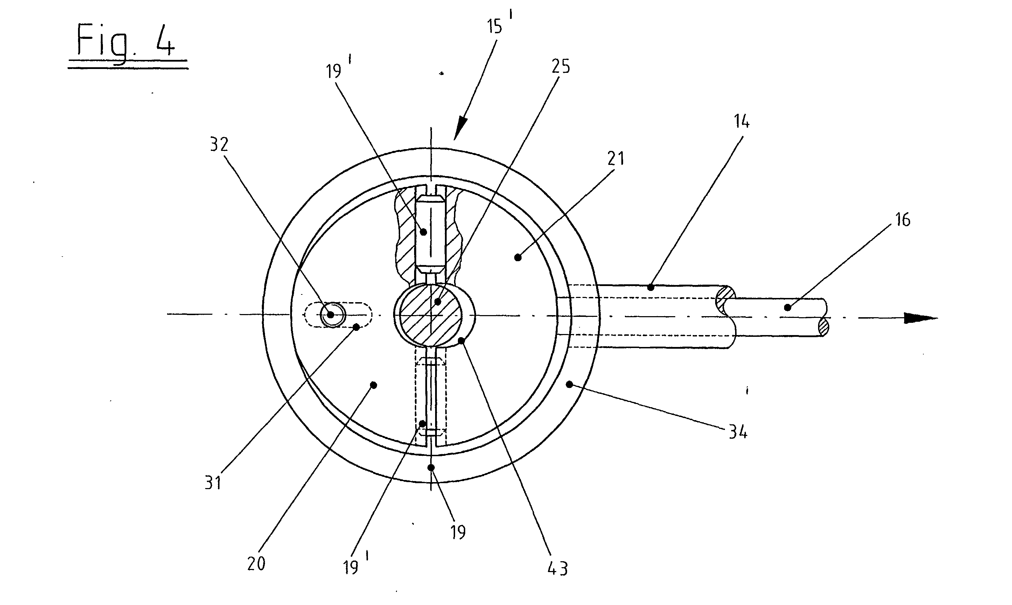

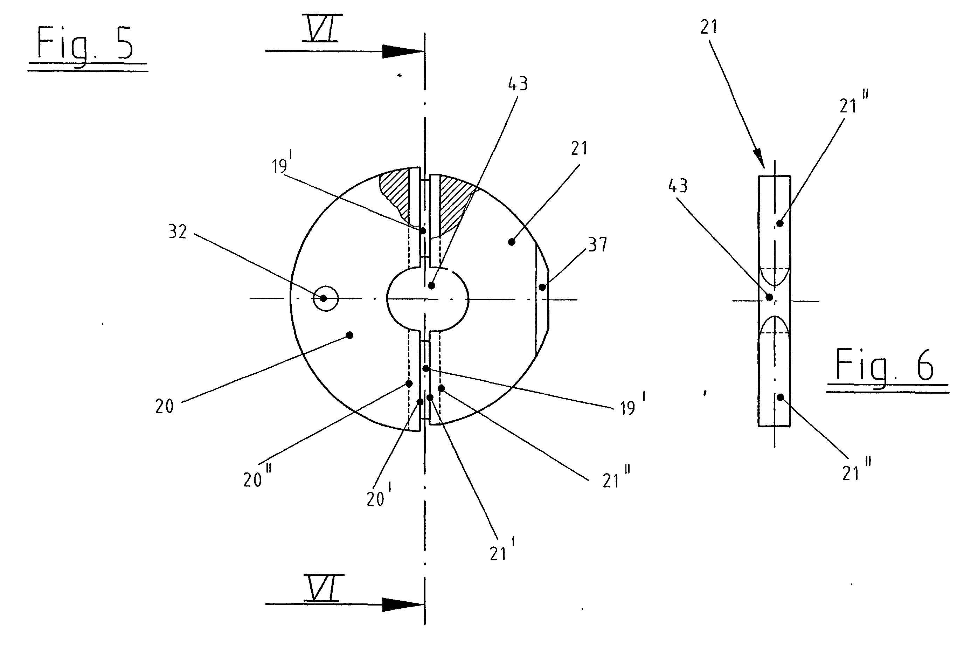

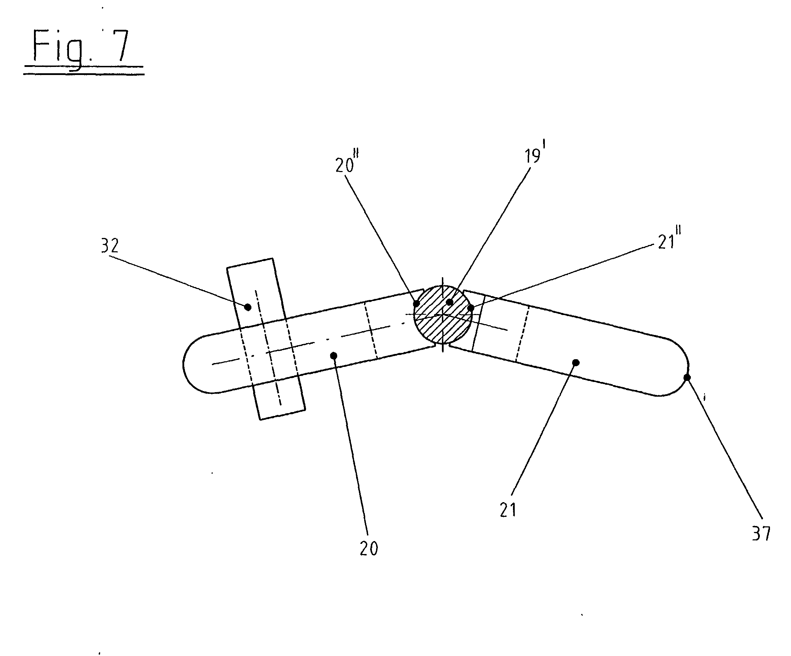

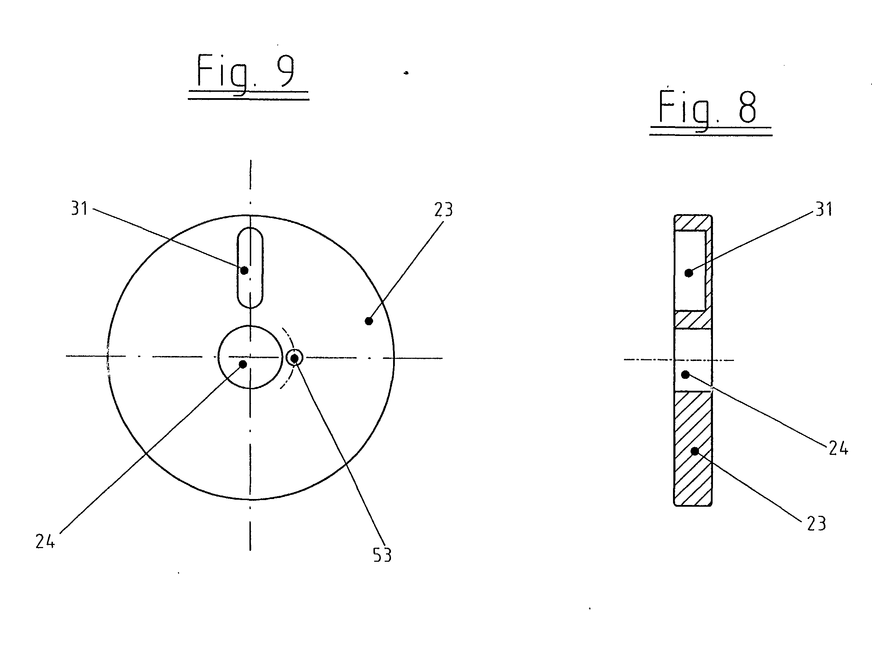

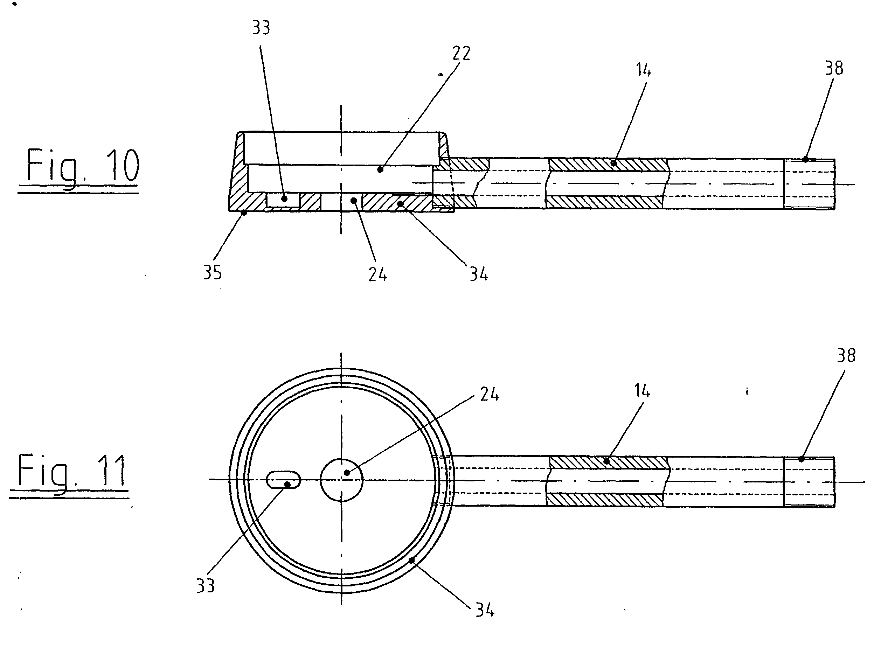

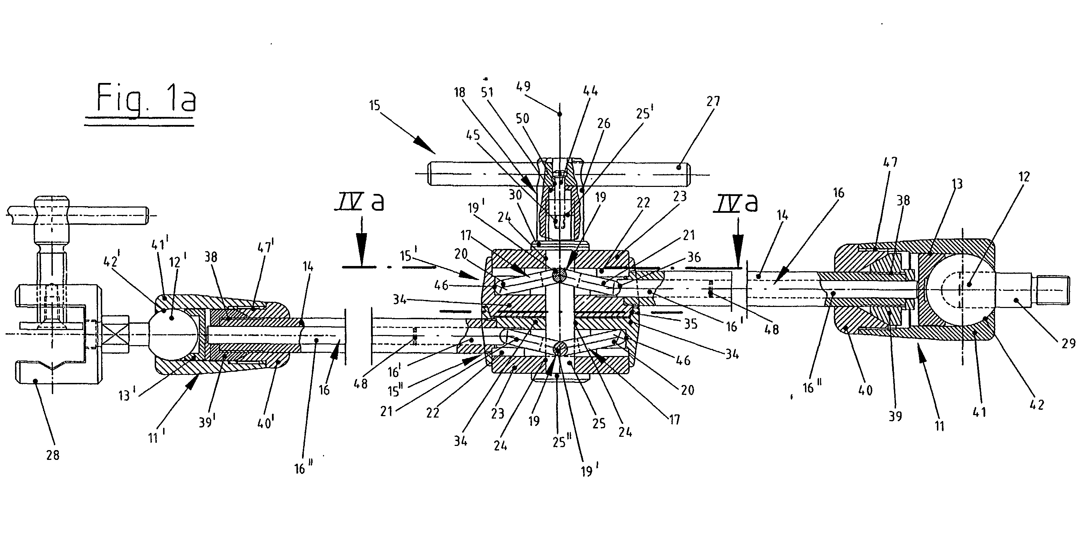

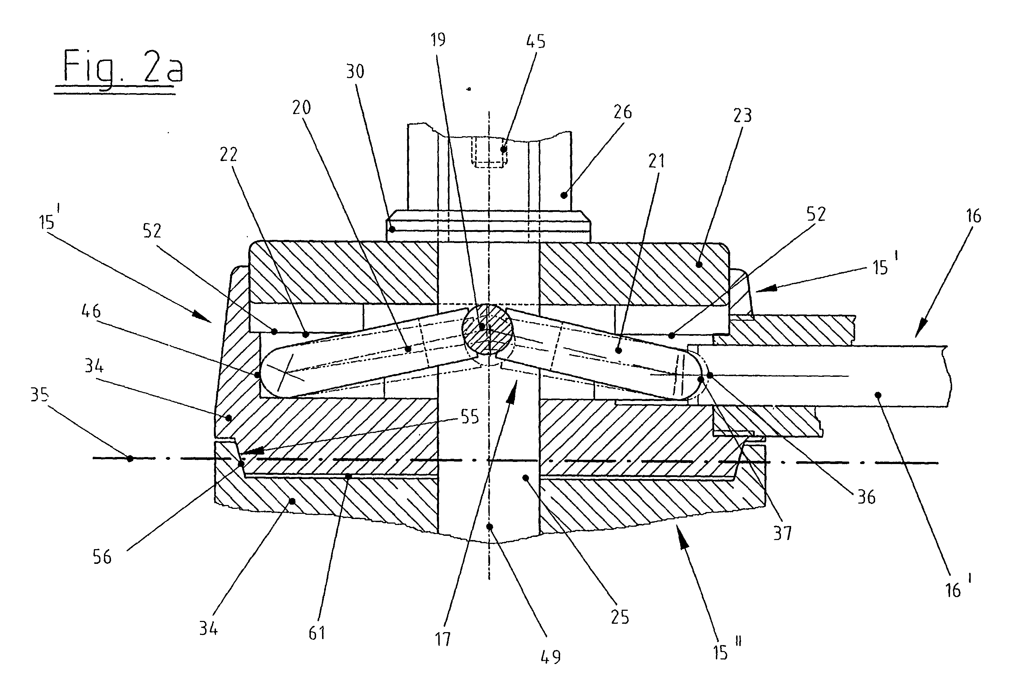

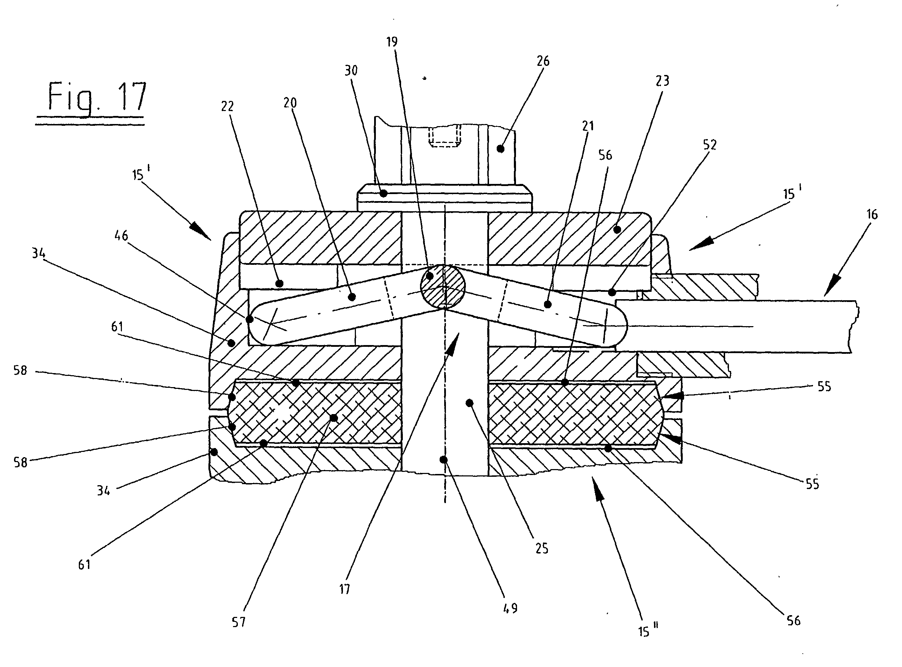

- Figur 17: einen teilweise geschnittenen, vergrößerten Ausschnitt aus Figur 14 analog den Figuren 2, 2a.

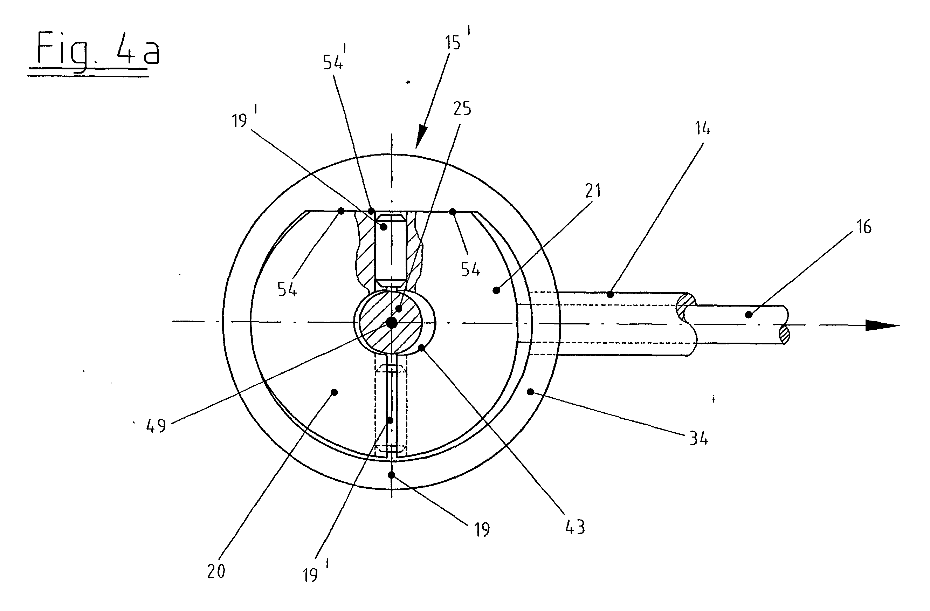

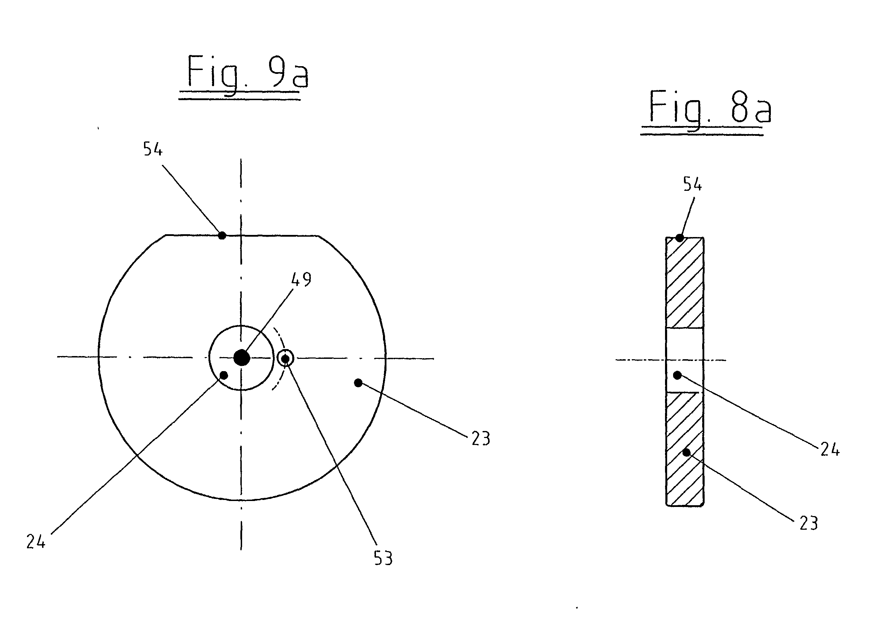

Nach den Figuren 1, 1a, 2, 2a und 4, 4a weist ein Betätigungsblock 15 zwei mit ihren Böden entlang einer Berührungsebene 35 aneinander anliegende Hälften 15', 15" auf, die jeweils aus einem schalenförmigen Gehäuse 34 (Figuren 10, 10a, 11, 11a) mit im wesentlichen kreisförmigem horizontalen Querschnitt und einer darin verschiebbar angeordneten Druckscheibe 23 (Figuren 8, 8a, 9, 9a) bestehen. Zwischen den Druckscheiben 23 und den Gehäusen 34 befindet sich jeweils eine Ausnehmung 22, in der ein Kniehebelmechanismus 17 untergebracht ist, der aus zwei, im einzelnen in den Figuren 4 bis 6 dargestellten Kniehebelscheiben 20, 21 und einem zwischen diesen wirksamen Kniegelenk 19 besteht, das durch zwei Druckrollen 19' gebildet ist, die in Hohlkehlen 20", 21" untergebracht sind, welche in den geraden Seiten 20', 21' der Kniehebelscheiben 20, 21 vorgesehen sind.

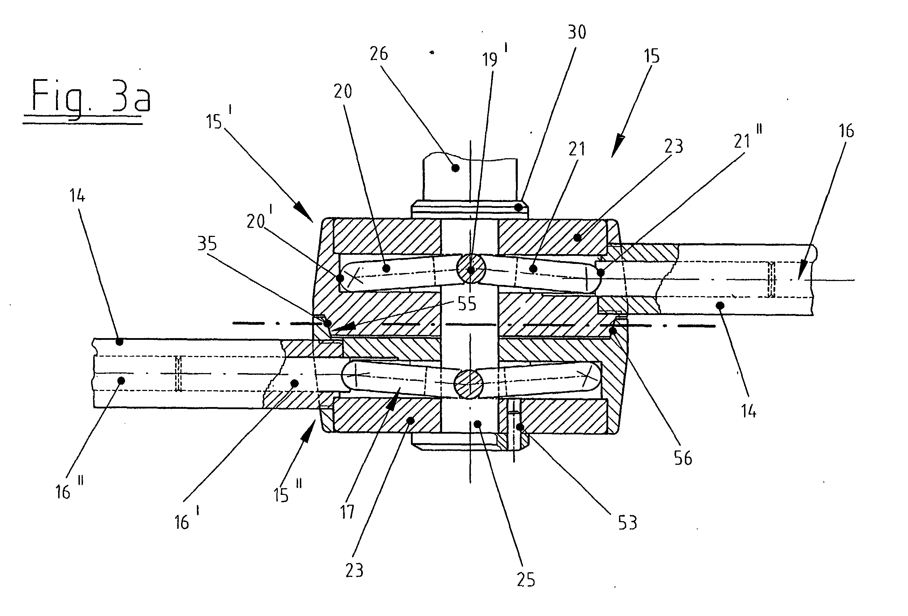

Die Kniehebelscheiben 20, 21 sind derart in den Ausnehmungen 22 angeordnet, daß der eine Kniehebel 20 mit seinem wulstartig abgerundeten Ende 46 am Umfangsrand des Gehäuses 34 abgestützt ist, während das wulstartig ausgebildete freie Ende 37 des anderen Kniehebels 21 in einer komplementär dazu ausgebildeten Hohlkehle 36 in der einen Stirnseite einer Stoßstange 16 in Schubkraft übertragender Verbindung steht, welche in einem quer vom Gehäuse 34 abzweigenden Rohr 14 verschiebbar geführt ist, das sich senkrecht zur Bewegungsrichtung des Kniegelenks 19 erstreckt und an den von den Hälften 15', 15" abgewandten Enden jeweils mit einem Klemmbackenelement 11 verbunden ist, das eine von der Stoßstange 16 beaufschlagte Klemmbacke 13 und ein als Kugel ausgebildetes Klemmglied 12 enthält, an dem ein Schraubzwingenelement 28 bzw. ein Schraubstutzen 29 angebracht ist. Die Kniehebelscheiben 20, 21 sind sowohl in der entspannten (Figur 1, 1a, 2, 2a) als auch in der gespannten (Figur 3, 3a) Lage soweit gegeneinander geknickt, daß keine Selbsthemmung auftritt. Der Winkel größer als 180° befindet sich dabei auf den voneinander abgewandten Seiten der beiden Kniehebelpaare.

Das vom Betätigungsblock 15 abgewandte Ende der Verbindungsrohre 14 ist mit einem Außengewinde 38 versehen, auf das jeweils eine Keilmutter 39, 39' aufgeschraubt ist, die mit einer komplementären Kugelhülsenmutter 40, 40' derart zusammenwirkt, daß eine die Pfanne 42, 42' für die Klemmkugel 12, 12' aufweisende, über eine Gewindeverbindung 47, 47' mit der Kugelhülsenmutter 40, 40' verbundene Kugelhülse 41, 41' beim Beaufschlagen der Klemmbacke 13, 13' mittels der Stoßstange 16 eine feste Verbindung zwischen der Klemmkugel 12, 12' und dem Verbindungsrohr 14 herstellt. Die Kugelhülse 41, 41' weist im Bereich der Klemmkugel 12, 12' seitlich nicht gezeigte Aufschnitte auf, aufgrund deren die Klemmkugeln 12, 12' mit dem Rohrstutzen 29 aus der Position nach Figur 1, 1a in beiden Richtungen um eine Hochachse um etwa 90° verschwenkt werden können. Außerdem ist die Klemmkugel 12, 12' um die Achse der Stoßstange 16 im entklemmten Zustand verdrehbar.

Die Stoßstange 16 ist zweigeteilt, indem sie aus einem kurzen inneren Stück 16', das die Hohlkehle 36 aufweist, und einem äußeren längeren Stück 16" besteht, das bei 48 (Figur 1, 1a) flach an der flachen Stirnseite des Stückes 16' anliegt und mit seinem anderen Ende die Klemmbacke 13, 13' beaufschlagt.

Während das Klemmbackenelement 11, welches über einen Schraubstutzen 29 an einem mit dem Operationstisch verbundenen Stativ befestigt ist, relativ massiv und kräftig ausgebildet ist, weil es nicht nur den Betätigungsblock 15, sondern auch die am anderen Ende befestigten medizinischen Instrumente und Apparate tragen muß, ist das am entgegengesetzten Ende vorgesehene Klemmbackenelement 11' deutlich kleiner und schwächer ausgebildet, weil es über die Schraubzwinge 28 lediglich das Gewicht der angebrachten medizinischen Instrumente und Apparate tragen muß.

Um die Kniehebelmechanismen 17 zu betätigen, ist eine Bewegungserzeugungsvorrichtung 18 im Betätigungsblock 15 vorgesehen, welche einen Zugbolzen 25 mit einem unteren Kopf 25" und einem oberen Gewindeende 25' aufweist, der sich durch Bohrungen 24 in den den Betätigungsblock 15 bildenden Druckscheiben 23 und Gehäusen 34 hindurch erstreckt und dessen Achse 49 senkrecht zu den Stoßstangen 16 verläuft. Alternativ könnte auch ein pneumatischer oder hydraulischer Zug- bzw. Druckzylinder, ein Spannexzenter oder ähnliches zur Bewegungserzeugung verwendet werden.

Oben aus der oberen Druckscheibe 23 ragt ein Gewindeende 25' des Zugbolzens 25 heraus, auf welches ein Mutternelement 26 aufgeschraubt ist, das durch einen quer angeordneten Doppelhebel 27 verdreht werden kann. Eine obere Scheibenanordnung 30 überträgt die von dem Mutternelement 26 ausgeübte Bewegung bzw. Kraft auf die obere Druckscheibe 23, während die Reaktionskraft durch den unteren Kopf 25" des Zugbolzens 25 auf die untere Druckscheibe 23 übertragen wird.

Durch eine Bohrung 50 (Figur 1, 1a) im oberen Bereich des Mutternelementes 26 ist eine Bewegungsbegrenzungsschraube 44 gesteckt, die in eine koaxiale Gewindebohrung 45 des Zugbolzens 25 bis zu einer vorbestimmten Tiefe eingeschraubt ist, wodurch das Mutternelement 26 nur so weit vom Zugbolzen 25 abgeschraubt werden kann, bis der Kopf der Bewegungs-Begrenzungsschraube 44 am oberen Rand der Bohrung 50 anliegt. Auf diese Weise wird der Bewegungsbereich des Kniegelenks 19 in Entspannungsrichtung begrenzt.

Weiter weist das Mutternelement 26 oberhalb der oberen Stirnseite des Zugbolzens 25 eine Ringstufe 51 auf, die grundsätzlich für die Begrenzung der Bewegung des Mutternelementes 26 in Richtung der Kniehebelscheibenanordnung 20, 21 herangezogen werden könnte. Bevorzugt ist zu diesem Zweck aber die insbesondere aus den Figuren 2, 2a ersichtliche Ausbildung, wonach die schalenförmigen Gehäuse 34 in einem der Aufnahme der Kniehebel im am meisten gestreckten Zustand dienenden Abstand vom Boden eine radial nach außen vorspringende Ringstufe 52 aufweisen, die die Bewegung der Druckscheiben 23 nach innen begrenzt. Auf diese Weise wird eine zu starke Streckung des Kniehebelmechanismus 17 über die in Figur 2, 2a strichpunktierte Position hinaus wirksam vermieden. Bevorzugt ist es also, wenn die Bewegung der Kniehebelscheiben 20, 21 in Richtung der Kniehebelstreckung nur durch das Anstoßen der Druckscheiben 23 an die Ringstufen 52 begrenzt wird, die auch in der unteren Hälfte 15" am Umfangsrand des Gehäuses 34 vorgesehen ist.

Im zusammengebauten Zustand umgeben zentrale Ausnehmungen 43 (Figur 4, 4a) der Kniehebelscheiben 20, 21 mit geringem Abstand den Zugbolzen 25 in einer solchen Weise, daß die Kniehebelscheiben sich unter Einwirkung der Bewegungserzeugungsvorrichtung 18 innerhalb des vorgesehenen Bereiches frei bewegen können.

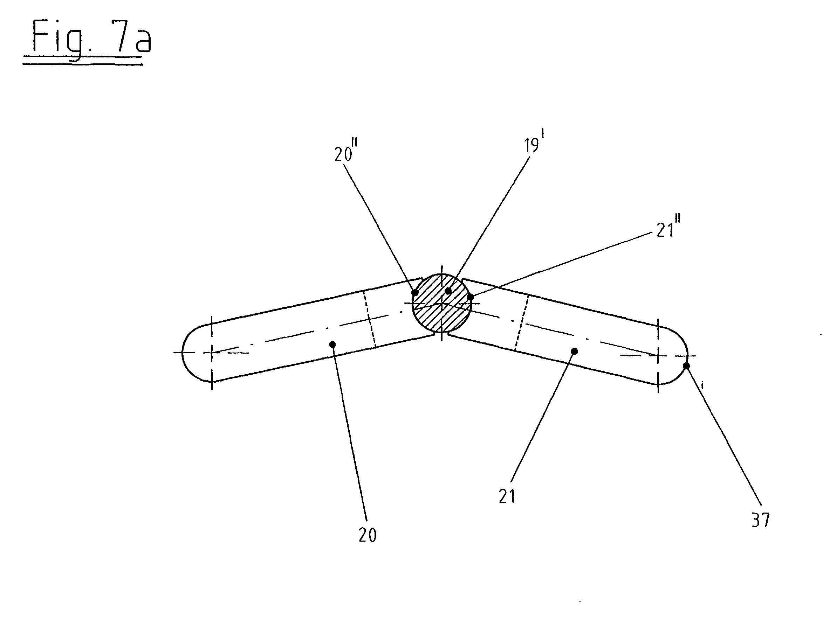

Zu beiden Seiten des Zugbolzens 25 ist nach Figur 4, 4a jeweils eine Druckrolle 19' in den Hohlkehlen 20", 21" (Figur 7, 7a) untergebracht. Die Tiefe der Hohlkehlen 20", 21" ist so zu bemessen, daß auch im am stärksten geknickten Zustand (Figuren 1, 1a, 2, 2a, 7, 7a) keine Gefahr eines Herausspringens der Druckrollen 19' besteht.

Die Druckrollen 19' werden von oben bzw. unten durch die Druckscheiben 23 beaufschlagt, wodurch eine relativ großflächige Krafteinleitung und -übertragung erzielt wird.

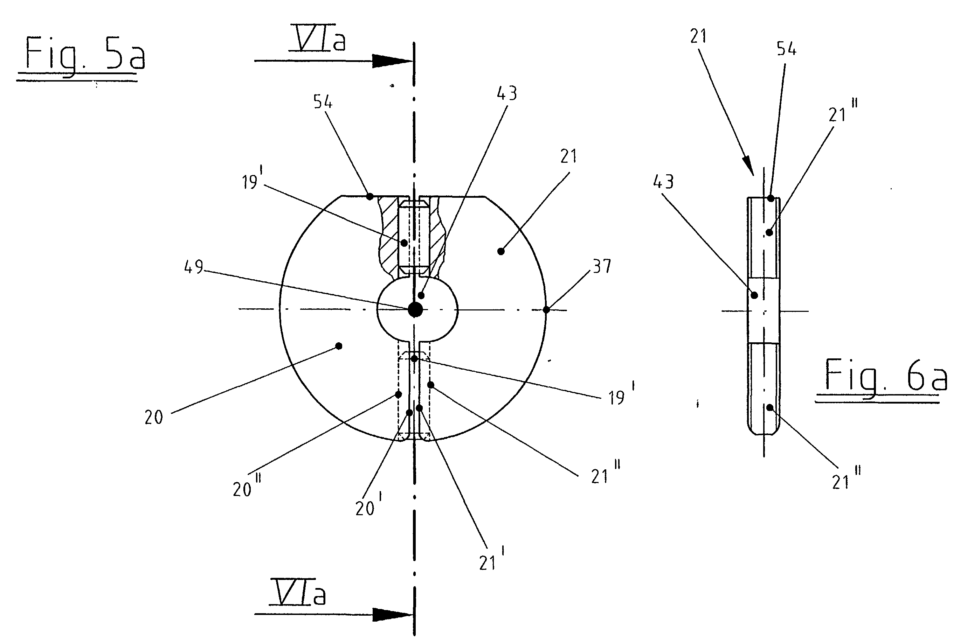

Nach den Figuren 1, 2, 3, 4, 8, 9, 10, 11 weisen die Druckscheiben 23 und die Böden der Gehäuse 34 radiale Ausnehmungen 31 bzw. 33 auf, die sich axial gegenüberliegen und in welche ein Drehsicherungsstift 32 (siehe auch Figuren 5, 6, 7) eingreift, der sich von der Kniehebelscheibe 20 in entgegengesetzten Richtungen in die Ausnehmungen 31, 33 hineinerstreckt.

Die Dimensionierung muß so sein, daß durch die Anordnung des Drehsicherungsstiftes 32 in den langlochartigen Ausnehmungen 31, 33 die Bewegung des Kniehebelmechanismus 17 beim Klemmen und Entklemmen nicht behindert wird, jedoch eine Relativdrehung zwischen den Druckscheiben 23, dem Kniehebelmechanismus 17 und den Gehäusen 34 vermieden wird.

Durch den in die Ausnehmungen 31, 33 eingreifenden Drehsicherungsstift 32 wird eine Relativverdrehung zwischen den Kniehebelscheiben 20, 21 und dem Gehäuse 34 vermieden. Außerdem kann sich durch das Eingreifen des Drehsicherungsstiftes 32 in die Ausnehmung 31 der Druckscheibe 23 auch die Druckscheibe nicht relativ zum Gehäuse bzw. den Kniehebelscheiben 20, 21 verdrehen.

Eine weitere Möglichkeit der Verdrehsicherung zwischen dem Gehäuse 34 und den Kniehebelscheiben 20, 21 entnimmt man den Figuren 1a, 2a, 3a, 4a, 5a, 6a, 7a, 8a, 9a, 10a, 11a. Insbesondere aus den Figuren 4a, 5a, 6a, 8a, 9a, 11a und 13 erkennt man, daß durch eine Abflachung 54 an den Seiten der Kniehebelscheiben 20, 21 benachbart dem Kniegelenk 19 und eine der Abflachung 54 gegenüberliegende Gegenabflachung 54' des Gehäuses 34 erreicht werden kann, daß eine Relativverdrehung der Kniehebelscheiben 20, 21 relativ zum Gehäuse 34 um die Achse 49 nicht möglich ist.

Die Drehsicherung der Druckscheiben 23 kann nach den Figuren 8a und 9a in entsprechender Weise dadurch erreicht werden, daß auch die Druckscheibe gegenüber der Gegenabflachung 54' des Gehäuses 34 eine Abflachung 54 aufweist (Figuren 8a, 9a).

Während bei dem Ausführungsbeispiel nach den Figuren 1, 2, 3, 4, 5, 6, 7, 8, 9, 10, 11 die entlang der Symmetrieebene 35 aneinanderliegenden Böden der Gehäuse 34 eben und senkrecht zur Drehachse 49 verlaufend angeordnet sind, sind bei der Ausführungsform nach den Figuren 1a, 2a, 3a, 10a die aneinanderliegenden Bereiche der Böden der Gehäuse 34 komplementär zueinander konusförmig ausgebildet.

Wie insbesondere aus den Figuren 2a und 3a erkennbar ist, weist das obere Gehäuse 34 einen zum gegenüberliegenden Gehäuse 34 hin vorspringenden Konusbereich 35 auf, der in eine dazu komplementäre Konusausnehmung 56 im Boden des zur Symmetrieebene 35 spiegelbildlich angeordneten unteren Gehäuses 34 eingreift, und zwar derart, daß die Konusflächen des Konusbereiches 55 und der Konusausnehmung 56 aneinanderliegen. Zwischen den ebenen Endflächen der Gehäuse 34 befindet sich zu diesem Zweck ein Spalt 61 (Figur 2a).

Auf diese Weise wird das Reibmoment zwischen den beiden Gehäusen 34 im Bereich der Symmetrieebene 35 erhöht, so daß auch schon bei einer geringen Verspannung der beiden Gehäuse 34 gegeneinander eine ausreichende Klemmung gegen Relativverdrehung der beiden Gehäuse 34 erzielt wird. Trotz geringer Anzugskraft sind die Gehäuse 34 auf diese Weise sicher fixiert. Zusätzlich fixiert die Konusform das Zentralgelenk radial. Die auftretenden Radialkräfte müssen nicht mehr durch den Zugbolzen 25 aufgefangen werden, was eine deutliche Verbesserung darstellt.

Bei der Ausführungsform nach den Figuren 14 bis 17 weisen die beiden mit ihrem Bodenbereich gegenüberliegenden Gehäuse 34 jeweils im Bodenbereich eine Ausnehmung 59 mit einer Umfangs-Konusfläche 58 auf. In diese Ausnehmung greift ein gemäß den Figuren 15, 16 geformter Gleiteinsatz 57 ein, der mit zur Symmetrieebene 35 spiegelsymmetrischen Konusflächen 60 versehen ist, die zu den Umfangskonusflächen 58 der Ausnehmungen 59 komplementär verlaufen. Die Dimensionierung ist derart, daß der Gleiteinsatz 57 die beiden Gehäuse 34 in einem geringen Abstand voneinander hält. Die Dicke des Gleiteinsatzes 57 ist so gewählt, daß zwischen den ebenen Ober- und Unterflächen einerseits und den gegenüberliegenden ebenen Flächen der Konusausnehmungen 56 ein Spalt 61 verbleibt, der gewährleistet, daß die Kraftübertragung lediglich über die Umfangskonusflächen 58 erfolgt. Für den Durchgang des Zugbolzens 25 weist der Gleiteinsatz 57 nach den Figuren 15, 16 eine zentrale Bohrung 24' auf.

Der Gleiteinsatz 57 besteht aus einem geeigneten Gleitmaterial, welches ein Kratzgeräusch beim Relativverdrehen der beiden Gehäuse 34 und ein eventuelles Anfressen der Berührungsflächen ohne Beeinträchtigung der Haltefunktion verhindert. Hierzu wird der Gleiteinsatz 57 vorzugsweise aus einem geeigneten Kunststoffmaterial hergestellt.

Die Montage und der Gebrauch des erfindungsgemäßen Stativs gehen wie folgt vor sich:

Bei der Montage wird die Kugelhülsenmutter 40, 40' als erstes auf das Rohr 14 aufgesteckt. Die Kugelhülsenmutter 40, 40' sitzt zunächst nicht fest, sondern drehbar und axial verschiebbar auf dem Rohr 14. Erst durch das Aufschrauben der Keilmutter 39, 39' wird die Kugelhülsenmutter 40, 40' axial in der Klemmkraftrichtung fixiert.

Wird nun die Kugelhülse 41, 41' mit der Klemmbacke 13, 13' und der Klemmkugel 12, 12' auf die Kugelhülsenmutter 40, 40' aufgeschraubt, entsteht die Gewindeverbindung 47, 47' und es ergibt sich eine drehbare, aber axial nicht verschiebbare Verbindung.

Wirkt dann eine Klemmkraft über die Kniehebelscheiben 20, 21 und die Stoßstange 16 auf die Klemmbacke 13, 13', bewirkt diese, daß das Klemmbackenelement 11, 11' axial und gegen Drehung fixiert ist.

Beim Lösen der Klemmkraft ist durch die Längenabstimmung der Stoßstangen 16 ein axial spielfreies Verdrehen der Klemmbackenelemente 11, 11' auf dem Rohr 14 noch möglich. Dieses Verklemmen bzw. die Möglichkeit des spielfreien Verdrehens der Klemmbackenelemente trägt dazu bei, daß ein Gelenkstativ geschaffen wird, welches im ungeklemmten Zustand ein Maximum an Beweglichkeit ermöglicht und durch eine zentrale Betätigung in einen starren Zustand gebracht werden kann.

Zunächst wird der Rohrstutzen 29 z.B. über eine Stativstange und einen Klemmblock an einem Operationstisch höhen- und längsverschiebbar angebracht.

Anschließend wird das Operationshilfsmittel, z.B. ein medizinisches Instrument oder ein medizinischer Apparat in der Schraubzwingenanordnung 28 festgeklemmt.

Nunmehr wird bei noch entspannten Kniehebelmechanismen 17 die gewünschte Relativposition zwischen dem Rohrstutzen 29 und der Schraubzwingenanordnung 28 eingestellt, wobei die Klemmkugeln 12, 12' innerhalb der Pfannen 42, 42' bzw. der Klemmbacken 13, 13' weitgehend frei verstellt werden können. Außerdem können die Verbindungsrohre 14 in der gewünschten Weise gegeneinander um die Achse 49 des Betätigungsblocks 15 winkelmäßig verstellt werden.

Sobald die gewünschte Relativposition der einzelnen Bauelemente erreicht ist, werden durch Verdrehen des Doppelhebels 27 im Uhrzeigersinn (Figur 1, 1a, 2, 2a) die Kniehebelmechanismen 17 aus der entspannten Lage nach Figur 1, 1a in die Klemmlage nach Figur 3, 3a bewegt, wodurch die Stoßstangen 16 in Richtung der Klemmbacken 13, 13' so weit verschoben werden, daß die Klemmbacken 13, 13' die Klemmkugeln 12, 12' fest gegen die Pfannen 42, 42' drücken. Gleichzeitig werden die beiden Gehäuse 34 im Bereich der Symmetrieebene 35 fest aneinandergedrückt, so daß eine weitere Relativverdrehung derselben nicht mehr möglich ist. Hierzu trägt insbesondere die Konusanordnung 55, 56 nach den Figuren 2a, 3a bzw. der Gleiteinsatz 57 nach den Figuren 14 bis 16 bei. Durch geeignete Wahl der Konuswinkel der Konusanordnung 55, 56 bzw. der Umfangskonusfläche 58 kann erreicht werden, daß auch bei relativ geringen, durch die Bewegungserzeugungsvorrichtung 18 erzeugten Spannkräften eine erhebliche Widerstandskraft gegen Verdrehung der beiden Hälften 15', 15" des Betätigungsblockes 15 erzielt wird. Nunmehr ist das Stativ gebrauchsfähig.

Um beim Anziehen des Mutternelementes 26 ein Mitdrehen des Zugbolzens 25 sicher zu vermeiden, ist zwischen dessen Kopf 25" und der unteren Druckscheibe 23 ein Drehsicherungsstift 53 (Figuren 1, 1a, 9, 9a) angebracht.

Die Spannkräfte beim Drehen des Mutternelements 26 in Klemmrichtung werden von dem Mutternelement 26 über die Scheibenanordnung 30 bzw. den Kopf 25" auf die Druckscheiben 23 übertragen und von dort auf die Druckrollen 19' der Kniehebelmechanismen 17. Auf diese Weise entstehen erhebliche Spreizkräfte, die die Stoßstangen 16 beaufschlagen. Durch Verwendung eines Kniehebelmechanismus 17 als Getriebe können relativ große Verstellwege auf platzsparende Weise erzielt werden. Im annähernd gestreckten Zustand der Kniehebel 20, 21 (Figur 3, 3a) wird eine so erhebliche Kraftverstärkung erzielt, daß eine einwandfreie Klemmung der Klemmkugeln 12, 12' erzielt wird, die auch leicht wieder lösbar ist, weil die Kniehebel 20, 21 nach Lösen des Mutternelementes 26 ohne die Gefahr einer Selbsthemmung problemlos wieder in die entspannte Lage nach Figur 1 bzw. 1a (Darstellung in ausgezogenen Linien) zurückkehren. Aufgrund der erfindungsgemäßen Anordnung ist die Verstellung der Kniehebel 20, 21 mit äußerst geringem Kraftaufwand möglich.

Die beiden axial versetzt in entgegengesetzten Richtungen weisenden Verbindungsrohre 14 sind im entklemmten Zustand um die Achse 49 um 360° relativ zueinander verschwenkbar und können in jeder relativen Winkelposition durch Anziehen der Klemm-Mutter 26 relativ zueinander fixiert werden, indem die beiden Hälften 15', 15" des Betätigungsblocks 15 gegeneinander gepreßt werden.

Das Klemmbackenelement 11, 11' ermöglicht aufgrund der nicht dargestellten seitlichen Einschnitte ein Schwenken der Klemmkugeln 12, 12' um 180° um eine parallel zur Achse 49 verlaufende Hochachse.

### Bezugszeichenliste

- 11: großes Klemmbackenelement
- 11': kleines Klemmbackenelement
- 12: großes Klemmglied (Klemmkugel)
- 12': kleines Klemmglied (Klemmkugel)
- 13: große Klemmbacke
- 13': kleine Klemmbacke
- 14: Verbindungselement (Verbindungsrohr)
- 15: Betätigungsblock
- 15': Hälfte
- 15": Hälfte
- 16: Stoßstange
- 16': erstes Stück der Stoßstange
- 16": zweites Stück der Stoßstange
- 17: Kniehebelmechanismus
- 18: Bewegungserzeugungsvorrichtung
- 19: Kniegelenk
- 19': Druckrolle
- 20: Kniehebelscheibe
- 20': gerade Seite
- 20": Hohlkehle
- 21: Kniehebelscheibe
- 21': gerade Seite
- 21": Hohlkehle
- 22: Ausnehmung
- 23: Druckscheibe
- 24: Bohrung
- 24': Bohrung
- 25: Zugbolzen
- 25': Gewindeende
- 25": Kopf
- 26: Mutternelement
- 27: Doppelhebel
- 28: Schraubzwingenvorrichtung
- 29: Schraubstutzen
- 30: Scheibenanordnung
- 31: Ausnehmung
- 32: Drehsicherungsstift
- 33: Ausnehmung
- 34: Gehäuse
- 35: Berührungsebene
- 36: Hohlkehle
- 37: Ende
- 38: Außengewinde
- 39: Keilmutter
- 39': Keilmutter
- 40: Kugelhülsenmutter
- 40': Kugelhülsenmutter
- 41: Kugelhülse
- 41': Kugelhülse
- 42: Pfanne
- 42': Pfanne
- 43: Ausnehmung
- 44: Bewegungs-Begrenzungsschraube
- 45: Gewindebohrung
- 46: Ende
- 47: Gewindeverbindung
- 47': Gewindeverbindung
- 48: Verbindungsstelle
- 49: Achse
- 50: Bohrung
- 51: Ringstufe
- 52: Ringstufe
- 53: Drehsicherungsstift
- 54: Abflachung
- 54': Gegenabflachung
- 55: Konusbereich
- 56: Konusausnehmung
- 57: Gleiteinsatz
- 58: Umfangskonusfläche
- 59: Ausnehmung
- 60: Konusfläche
- 61: Spalt

## Patentansprüche

1. Gelenkstativ insbesondere zur verstellbaren Anbringung von Gegenständen, insbesondere medizinischen Instrumenten und/oder Apparaten, an einer Unterlage, insbesondere einem medizinischen Operationstisch, mit
wenigstens einem Klemmbackenelement (11, 11'), welches ein vorzugsweise als Haltekugel ausgebildetes Klemmglied (12, 12') und eine relativ zu diesem verschiebbaren Klemmbacke (13, 13') zur wahlweisen Klemmung und Entklemmung des Klemmgliedes (12, 12') aufweist,
wenigstens einem mit einem Ende mit dem Klemmbackenelement (11, 11') verbundenen, vorzugsweise als Rohr ausgebildeten, länglichen Verbindungselement (14),
einem mit dem anderen Ende des Verbindungselementes (14) verbundenen Betätigungsblock (15),
wenigstens einer zumindest im wesentlichen parallel zum Verbindungselement (14) verlaufenden Stoßstange (16, 16'), welche die Klemmbacke (13) und den Betätigungsblock (15) in Schubkraft übertragender Weise verbindet,
einer eine zumindest im wesentlichen senkrecht zur Stoßstange (16, 16') verlaufende Bewegung erzeugenden Bewegungserzeugungsvorrichtung (18) und wenigstens einem Getriebemechanismus (17) mit einem einseitig von der Bewegungserzeugungsvorrichtung (18) beaufschlagten Kniehebel (21), dessen anderes Ende (37) mit dem den Betätigungsblock zugewandten Ende (36) der Stoßstange (16, 16') in einer Schubkraft übertragenden Verbindung steht und den von der Bewegungserzeugungsvorrichtung (18) erzeugten Weg unter Umlenkung um 90° auf die Stoßstange (16, 16') leitet, wodurch die Klemmbacke (13, 13') wahlweise mit dem Klemmglied (12, 12') in und außer Klemmeingriff gebracht werden kann, wobei jeder Kniehebelmechanismus (17) einen zweiten Kniehebel (20) unifasst, dessen vom Kniegelenk (19) abgewandtes Ende (46) gelenkt am Betätigungsblock (15) abgestützt ist,
**dadurch gekennzeichnet,**
**dass** der zweite Kniehebel (20) mit dem ersten Kniehebel (21) über ein Kniegelenk (19) verbunden ist, dass das Kniegelenk (19) des Kniehebelmechanismus (17) in Richtung der von der Bewegungserzeugungsvorrichtung (18) erzeugten Bewegung beweglich und von dieser beaufschlagt ist, dass die Kniehebel als zumindest im wesentlichen halbkreisförmige Kniehebelscheiben (20, 21) ausgebildet sind, deren gerade Seiten (20', 21') zur Bildung des Kniegelenks gelenkig miteinander verbunden sind, dass die geraden Seiten (20', 21') der Kniehebelscheiben (20, 21) jeweils eine Hohlkehle (20", 21") aufweisen, in die zur Bildung des Kniegelenks (19) wenigstens eine, und bevorzugt zwei zu den Hohlkehlen (20", 21") komplementäre Druckrollen (19') eingelegt sind, und dass die Druckrollen (19') auf der der Bewegungserzeugungsvorrichtung (18) zugewandten Seite stets etwas vorstehen und die Verbindung mit der Bewegungserzeugungsvorrichtung (18) herstellen.

2. Gelenkstativ nach Anspruch 1,
**dadurch gekennzeichnet,**
**daß** die Bewegungserzeugungsvorrichtung (18) einen vorzugsweise handbetätigten Schraubmechanismus (25, 26) aufweist.

3. Gelenkstativ nach Anspruch 2,
**dadurch gekennzeichnet,**
**dass** der Schraubmechanismus ein Bolzen- und Mutternelement (25, 26) aufweist, welche vorzugsweise durch einen quer am Bolzenoder Mutternelement (25, 26) angeordneten Doppelhebel (27) relativ zueinander verdrehbar sind.

4. Gelenkstativ nach einem der Anspruch 1,
**dadurch gekennzeichnet,**
**dass** die Bewegungserzeugungsvorrichtung (18) vorzugsweise als hydraulischer oder pneumatischer Zug- bzw. Druckzylinder ausgelegt ist, welcher die axiale Klemmbewegung bzw. Klemmkraft auf das Kniegelenk (17) ausübt.

5. Gelenkstativ nach einem der vorhergehenden Ansprüche,
**dadurch gekennzeichnet,**
**dass** die Kniehebel (20, 21) in einer Ausnehmung (22) des Betätigungsblocks (15) angeordnet sind.

6. Gelenkstativ nach Anspruch 5,
**dadurch gekennzeichnet,**
**dass** der Betätigungsblock (15) aus wenigstens einem schalenförmigen Gehäuse (34) und wenigstens einer in dieses vorzugsweise kolbenartig eingreifenden Druckscheibe (23) besteht, welche vorzugsweise einen kreisförmigen Querschnitt in Richtung senkrecht zur Richtung der Bewegung der Bewegungserzeugungsvorrichtung aufweisen, dass die Ausnehmung (22) zwischen dem Boden des schalenförmigen Gehäuses (34) und der Druckscheibe (23) ausgebildet ist, dass die Druckscheibe (23) vorzugsweise direkt das Kniegelenk (19), insbesondere die dort angeordneten Druckrollen (19') beaufschlagt und dass die Bewegungserzeugungsvorrichtung (18) die Druckscheibe (23) in Richtung der Kniehebelstreckung bewegen kann, wobei die volle Kniehebelstreckung auch im geklemmten Zustand nicht ganz erreicht wird.

7. Gelenkstativ nach einem der vorhergehenden Ansprüche,
**dadurch gekennzeichnet,**
**dass** der Betätigungsblock (15), insbesondere der Boden des schalenförmigen Gehäuses (34) und die Druckscheibe (23) eine sich zumindest im wesentlichen senkrecht zur Stoßstange (16) erstreckende zentrale Bohrung (24) aufweist, die von einem Zugbolzen (25) durchgriffen ist, der in Zusammenwirkung mit einem Mutternelement (26) die Bewegungserzeugungsvorrichtung (18) für die Betätigung des Kniehebelmechanismus (17) darstellt, wobei die Kniehebel (20, 21) insbesondere durch Vorsehen von halbkreisförmigen Ausnehmungen (43) in den geraden Seiten (20', 21') um den die zentrale Bohrung (24) durchgreifenden Zugbolzen (25) herumgeführt sind.

8. Gelenkstativ nach Anspruch 7,
**dadurch gekennzeichnet,**
**dass** ein Gewindeende (25') des Zugbolzens (25) aus der Druckscheibe (23) nach außen herausragt und darauf das Mutterelement (26) geschraubt ist, welches gegebenenfalls über eine druckverteilende Scheibenanordnung (30) die Druckscheibe (23) in Richtung der Kniehebelstreckung zu beaufschlagen gestattet.

9. Gelenkstativ nach Anspruch 8,
**dadurch gekennzeichnet,**
**dass** die Drehung des Mutterelementes (26) mittels eines an diesem angebrachten quer zur Drehachse verlaufenden Doppelhebels (27) erfolgt.

10. Gelenkstativ nach einem der vorhergehenden Ansprüche,
**dadurch gekennzeichnet,**
**dass** der Betätigungsblock (15) aus zwei mit in entgegengesetzten Richtungen weisenden Ausnehmungen (22) angeordneten, vorzugsweise gleich ausgebildeten Hälften (15', 15") mit jeweils bezüglich der Symmetrieebene (35) der beiden Gehäuse (34) spiegelbildlich angeordneten Klemmbackenelementen (11, 11'), Verbindungselementen (14), Stoßstangen (16, 16') und Getriebemechanismen (17) besteht, wobei die beiden Gehäuse (34) und Druckscheiben (23) vorzugsweise koaxial zueinander angeordnet sind.

11. Gelenkstativ nach Anspruch 10,
**dadurch gekennzeichnet,**
**dass** die Böden der beiden Gehäuse (34) eben ausgebildet sind und sich entlang der Symmetrieebene (35) berühren.

12. Gelenkstativ nach Anspruch 11,
**dadurch gekennzeichnet,**
**dass** die Berührungsfläche der beiden Gehäuse (34) einen vorzugsweise zur Achse (49) konzentrischen, kreisförmigen Verjüngungs-, insbesondere Konusbereich (55, 56) aufweist.

13. Gelenkstativ nach Anspruch 10
**dadurch gekennzeichnet,**
**dass** zwischen den Böden der beiden Gehäuse (34) ein eine zentrale Bohrung (24') aufweisender Gleiteinsatz (57) angeordnet ist, der vorzugsweise eine Doppelverjüngungs-, insbesondere Konusform aufweist und mit dazu komplementären Verjüngungs- bzw. Konusflächen (58) der beiden Gehäuse (34) zusammenwirkt.

14. Gelenkstativ nach Anspruch 13,
**dadurch gekennzeichnet,**
**dass** der Gleiteinsatz (57) kreisförmig ausgebildet und konzentrisch zur Achse (49) angeordnet ist.

15. Gelenkstativ nach Anspruch 13 oder 14,
**dadurch gekennzeichnet,**
**dass** in den Böden der Gehäuse (34) Ausnehmungen (59) zur Aufnahme je eines verjüngt, insbesondere konisch ausgebildeten Teils des Gleiteinsatzes (57) vorgesehen sind, wobei die Verjüngungs- bzw. Konusflächen (58) sich vorzugsweise am Umfang der Ausnehmung (59) befinden.

16. Gelenkstativ nach einem der Ansprüche 10 bis 15,
**dadurch gekennzeichnet,**
**dass** das eine Klemmbackenelement (11) eine Schraubzwingen-Vorrichtung (28) vorzugsweise zum Anbringen von medizinischen Instrumenten und Apparaten und das andere (11') einen Schraubstutzen (29) vorzugsweise zum Anbringen an einer Unterlage trägt.

17. Gelenkstativ nach einem der vorhergehenden Ansprüche,
**dadurch gekennzeichnet,**
**dass** das Verbindungselement ein Rohr (14) ist, welches mit dem Betätigungsblock (15) bzw. einem Klemmbackenelement (11, 11') verbunden ist und in dem die Stoßstange (16, 16') verschiebbar geführt ist.

18. Gelenkstativ nach einem der Ansprüche 1 bis 17 ,
**dadurch gekennzeichnet,**
**dass** zwischen dem Gehäuse (34) und dem Kniehebelmechanismus (17) eine Verdrehsicherung (31, 32, 33; 54, 54') vorgesehen ist.

19. Gelenkstativ nach Anspruch 18,
**dadurch gekennzeichnet,**
**dass** der am Betätigungsblock (15) abgestützte Kniehebel (20) einen im wesentlichen senkrecht zu seiner Längserstreckung verlaufenden Drehsicherungsstift (32) aufweist, der in eine entsprechende in radialer Richtung längliche Ausnehmung (33) des schalenförmigen Gehäuses (34) und vorzugsweise auch in eine entsprechende, in radialer Richtung längliche Ausnehmung (31) der Druckscheibe (23) eingreift und dadurch eine Relativverdrehung zwischen Kniehebelmechanismus (17) und Gehäuse und vorzugsweise auch Druckscheibe (23) verhindert, oder dass wenigstens eine der Kniehebelscheiben (20, 21) an ihrem Umfang, vorzugsweise im Bereich des Kniegelenks (19) eine Abflachung (54) aufweist, die an einer entsprechenden Gegenabflachung (54') des Gehäuses (34) anliegt.

20. Gelenkstativ nach einem der vorhergehenden Ansprüche,
**dadurch gekennzeichnet,**
**dass** die Stoßstange (16) an ihrem dem Kniehebelmechanismus (17) zugewandten Ende eine Hohlkehle (36) aufweist, in welche das hierzu komplementär ausgebildete Ende (37) der zugeordneten Kniehebelscheibe (21) eingreift.

21. Gelenkstativ nach einem der vorhergehenden Ansprüche,
**dadurch gekennzeichnet,**
**dass** die Stoßstange (16) zweigeteilt ist und das eine, vorzugsweise kürzere Stück (16') eine einheitliche Länge aufweist und mit dem Kniehebelmechanismus (17) in Verbindung steht, während das andere, die Klemmbacke (13) beaufschlagende, vorzugsweise längere Stück (16") flach am ersten Stück (16) anliegt und individuell entsprechend der gewünschten Gesamtlänge der Stoßstange (16) bemessen ist.

22. Gelenkstativ nach einem der vorhergehenden Ansprüche,
**dadurch gekennzeichnet,**
**dass** das rohrförmige Verbindungselement (14) an seinem dem Klemmbackenelement (11) zugewandten Ende mit einem Außengewinde (38) versehen ist, auf welches eine Keilmutter (39, 39') aufgeschraubt ist, an der von der Seite des Betätigungsblockes (15) her eine von dem rohrförmigen Verbindungselement (14) durchgriffene Keilhalterung (40, 40') angreift, auf die das das Klemmglied (12, 12') aufnehmende Gehäuse (41, 41') aufgeschraubt ist, welches die Pfanne (42, 42') für die Drehlagerung des Klemmgliedes (12, 12') aufweist und in welchem die Klemmbacke (13, 13') durch die Stoßstange (16) in Richtung der Pfanne (42, 42') verschiebbar angeordnet ist.

## Claims

1. A jointed support structure, in particular for the adjustable attachment of objects, in particular medical instruments and/or apparatus, to a support, in particular to a surgical operating table, comprising
at least one clamping jaw element (11, 11') having a clamping member (12, 12'), preferably made as a retaining ball, and a clamping jaw (13, 13') displaceable relatively thereto for the alternate clamping and unclamping of the clamping member (12, 12'); at least one elongate connecting element (14) connected at one end to the clamping jaw element (11, 11') and preferably made as a tube;
an actuating block (15) connected to the other end of the connecting element (14);
at least one push rod (16, 16') extending at least substantially parallel to the connecting element (14) and connecting the clamping jaw (13) and the actuating block (15) in a thrust transmitting manner;
a movement generating device (18) generating a movement extending at least substantially perpendicularly to the push rod (16, 16'); and at least one transmission mechanism (17) with a toggle lever (21) loaded by the movement generating device (18) at one end and whose other end (37) is connected to the end (36) of the push rod (16, 16') facing the actuating block in a thrust transmitting manner and transfers the travel generated by the movement generating device (18) while deflecting it through 90° to the push rod (16, 16'), whereby the clamping jaw (13, 13') can alternately be brought into and out of clamping engagement with the clamping member (12, 12'), wherein each toggle lever mechanism (17) includes a second toggle lever (20) whose end (46) remote from the toggle lever joint (19) is pivotally supported on the actuating block 15, **characterised**
**in that** the second toggle lever (20) is connected to the first toggle lever (21) via a toggle lever joint (19); in that the toggle lever joint (19) of the toggle lever mechanism (17) is moveable in the direction of the movement generated by the movement generating device (18) and is loaded by the latter; in that in that the toggle levers are made as at least substantially semi-circular toggle lever plates (20, 21) whose straight sides (20', 21') are pivotally connected to one another to form the toggle lever joint; in that the straight sides (20', 21') of the toggle lever plates (20, 21) each have. a groove (20", 21") into which at least one, and preferably two, pressure rollers (19') complementary to the grooves (20", 21") are inserted to form the toggle lever joint (19); and in that the pressure rollers (19') always protrude somewhat at the side facing the movement generating device (18) and make the connection to the movement generating device (18).

2. A jointed support structure in accordance with claim 1, **characterised in that** the movement generating device (18) has a preferably hand-operated-screw mechanism (25, 26).

3. A jointed support structure in accordance with claim 2, **characterised in that** the screw mechanism has a bolt and nut element (25, 26) which can be turned relative to one another, preferably by a T-bar (27) arranged transversely on the bolt or nut element (25, 26).

4. A jointed support structure in accordance with claim 1, **characterised in that** the movement generating device (18) is preferably designed as a hydraulic or pneumatic push or pull cylinder which exerts the axial clamping movement or clamping force on the toggle lever joint (17).

5. A jointed support structure in accordance with any one of the preceding claims, **characterised in that** the toggle levers (20, 21) are arranged in a recess (22) of the actuating block (15).

6. A jointed support structure in accordance with claim 5, **characterised in that** the actuating block (15) consists of at least one shell-like housing (34) and of at least one pressure plate (23) engaging therein in a preferably piston-like manner, both preferably having a circular cross-section in the direction perpendicular to the direction of movement of the movement generating device; **in that** the recess (22) is formed between the base of the shell-like housing (34) and the pressure plate (23); **in that** the pressure plate (23) exerts pressure preferably directly on the toggle lever joint (19), in particular on the pressure rollers (19') arranged there, and **in that** the movement generating device (18) can move the pressure plate (23) in the direction of the toggle lever extent, with the full toggle lever extent also not being fully reached in the clamped state.

7. A jointed support structure in accordance with any one of the preceding claims, **characterised in that** the actuating block (15), in particular the base of the shell-like housing (34) and the pressure plate (23), has a central bore (24) extending at least substantially perpendicular to the push rod (16) and penetrated by a draw bolt (25) which in cooperation with a nut element (26) represents the movement generating device (18) for the actuation of the toggle lever mechanism (17), with the toggle levers (20, 21) being guided around the draw bolt (25) penetrating the central bore (24), in particular by the provision of semi-circular recesses (43) in the straight sides (20', 21').

8. A jointed support structure in accordance with claim 7, **characterised in that** a thread end (25') of the draw bolt (25) projects outwardly from the pressure plate (23) and that the nut element (26) is screwed thereon which optionally allows pressure to be exerted on the pressure plate (23) in the direction of the toggle lever joint extent via a pressure-distributing plate arrangement (30).

9. A jointed support structure in accordance with claim 8, **characterised in that** the turning of the nut element (26) is effected by means of a T-bar (27) attached thereto and extending transversely to the axis' of rotation.

10. A jointed support structure in accordance with any one of the preceding claims, **characterised in that** the actuating block (15) consists of two halves (15', 15"), preferably designed the same, arranged in recesses (22) extending in opposite directions, having clamping jaw elements (11, 11'), connection elements (14), push rods (16, 16') and transmission mechanisms (17) respectively arranged in mirror image fashion with regard to the respective plane of symmetry (35) of the two housings (34), with the two housings (34) and pressure plates (23) being arranged preferably coaxially to one another.

11. A jointed support structure in accordance with claim 10, **characterised in that** the bases of the two housings (34) are made planar and contact one another along the plane of symmetry (35).

12. A jointed support structure in accordance with claim 11, **characterised in that** the contact surface of the two housings (34) has a circular tapering region, in particular a cone region (55, 56), preferably concentric to the axis (49).

13. A jointed support structure in accordance with claim 10, **characterised in that** a slide insert (57) having a central bore (24') is arranged between the bases of the two housings (34) and preferably has a double tapering shape, in particular a cone shape, and cooperates with tapering or cone surfaces (58) of the two housings (34) complementary thereto.

14. A jointed support structure in accordance with claim 13, **characterised in that** the slide insert (57) is made circular and is arranged concentrically to the axis (49).

15. A jointed support structure in accordance with claim 13 or claim 14, **characterised in that** recesses (59) are provided in the bases of the housings (34) to accommodate in each case one tapered, in particular conical, part of the slide insert (57), with the tapering or conical surfaces (58) preferably being located at the periphery of the recess (59).

16. A jointed support structure in accordance with any one of claims 10. to 15, **characterised in that** the one clamping jaw element (11) supports a screw clamp device (28), preferably for the attachment of medical instruments and apparatus, and the other (11') supports a screw neck (29), preferably for the attachment to a support.

17. A jointed support structure in accordance with any one of the preceding claims, **characterised in that** the connecting element is a tube (14) which is connected to the actuating block (15) or to a clamping jaw element (11, 11') and in which the push rod (16, 16') is displaceably guided.

18. A jointed support structure in accordance with any one of claims 1 to 17, **characterised in that** a rotational security means (31, 32, 33; 54, 54') is provided between the housing (34) and the toggle lever mechanism (17).

19. A jointed support structure in accordance with claim 18, **characterised in that** the toggle lever (20) supported on the actuating block (15) has a rotational security pin (32) extending substantially perpendicular to its longitudinal extent which engages into a corresponding recess (33) elongate in a radial direction of the shell-like housing (34) and preferably also into a corresponding recess (31), elongate in a radial direction, of the pressure plate (23) and thereby prevents a relative twisting between the toggle lever mechanism (17) and the housing and preferably also the pressure plate (23);or **in that** at least one of the toggle lever plates (20, 21) has a flat (54) at its periphery, preferably in the region of the toggle lever joint, (19) which abuts a corresponding counter-flat (54') of the housing (34).

20. A jointed support structure in accordance with any one of the preceding claims, **characterised in that** the push rod (16) has a groove (36) at its end facing the toggle lever mechanism (17) into which the end (37) of the associated toggle lever plate (21) of complementary shape engages.

21. A jointed support structure in accordance with any one of the preceding claims, **characterised in that** the push rod (16) is divided into two and **in that** the one, preferably shorter, piece (16') has a uniform length.and is connected to the toggle lever mechanism (17), while the other, preferably longer piece (16"), which exerts pressure on the clamping jaw (13), contacts the first piece (16) in a flat manner and is dimensioned individually corresponding to the desired total length of the push rod (16).

22. A jointed support structure in accordance with any one of the preceding claims, **characterised in that** the tubular connecting element (14) is provided at its end facing the clamping jaw element (11) with a male thread (38) on which a conical nut (39, 39') is screwed, on which a conical holder (40, 40') penetrated by the tubular connecting element (14) acts from the side of the actuating block (15) and onto which the housing (41, 41') is screwed which accommodates the clamping member (12, 12'), which has the cup (42, 42') for the pivoting of the clamping member (12, 12') and in which the clamping jaw (13, 13') displaceable by the push rod (16) in the direction of the cup (42, 42') is arranged.

## Revendications

1. Statif articulé, en particulier pour une fixation réglable d'objets, en particulier, d'instruments médicaux et/ou d'appareils sur un support, en particulier sur une table d'opération médicale avec,
au moins un élément de mâchoire de serrage (11, 11') qui possède un élément de serrage (12, 12'), de préférence équipé d'une sphère de support ainsi qu'une mâchoire de serrage (13, 13') pouvant être déplacée par rapport à cet élément, afin d'assurer au choix un serrage ou un déserrage de l'élément de serrage (12, 12'),
au moins un élément de connexion (14) allongé de préférence tubulaire et relié, à une extrémité, à l'élément de mâchoire de serrage (11, 11'),
un bloc d'actionnement (15) relié à l'autre extrémité de l'élément de connexion (14),
au moins une tige de butée (16, 16'), au moins pour l'essentiel parallèle à l'élément de connexion (14), tige qui relie la mâchoire de serrage (13) et le bloc d'actionnement (15) grâce à une méthode de transfert de poussée,
un dispositif de déplacement (18) entraînant un déplacement au moins pour l'essentiel perpendiculaire à la tige de butée (16, 16') et
au moins un mécanisme d'entraînement (17), équipé d'un levier coudé (21) alimenté placé d'un côté du dispositif de déplacement (18) et dont l'autre extrémité (37) se trouve dans une connexion de transfert de poussée, par l'intermédiaire de l'extrémité (36) de la tige de butée (16, 16') jouxtant le bloc d'actionnement, et conduit le trajet dessiné par le dispositif de déplacement (18) sur la tige de butée (16, 16'), suite à une déviation de 90°, la mâchoire de serrage (13, 13') pouvant alors être amenée, à l'aide de l'élément de serrage (12, 12'), au choix à l'intérieur et à l'extérieur de la prise de serrage, chaque mécanisme de levier coudé (17) comprenant un deuxième levier coudé (20) dont l'extrémité (46) éloignée de la genouillère (19) est supportée par appuis articulé sur le bloc d'actionnement (15),
**caractérisé en ce que**
le deuxième levier coudé (20) est relié au premier levier coudé (21) à l'aide d'une genouillère (19), **en ce que** la genouillère (19) du mécanisme de levier coudé (17) peut se déplacer dans le sens du déplacement produit par le dispositif de déplacement (18) et est alimentée par ce déplacement, **en ce que** les leviers coudés sont équipés, au moins pour l'essentiel, de disques de leviers coudés (20, 21) formant un demi-cercle et dont les côtés droits (20', 21') sont reliés les uns aux autres de manière articulée afin de former la genouillère, **en ce que** les côtés droits (20', 21') des disques de leviers coudés (20, 21) possèdent chacun une cannelure (20' ', 21'') dans laquelle est/sont inséré(s) au moins un et de préférence deux rouleaux presseurs (19') venant compléter les cannelures (20'', 21' ') afin de former la genouillère (19) et **en ce que** les rouleaux presseurs (19'.) font toujours plus ou moins saillie par rapport au côté jouxtant le dispositif de déplacement (18) et assurent la connexion avec le dispositif de déplacement (18).

2. Statif articulé selon la revendication 1,
**caractérisé en ce que**
le dispositif de déplacement (18) possède un mécanisme de vissage. (25, 26) actionné de préférence manuellement.

3. Statif articulé selon la revendication 2,
**caractérisé en ce que**
le mécanisme de vissage présente un élément de boulon et un élément d'écrou (25, 26) qui peuvent être tournés l'un par rapport à l'autre de préférence à l'aide d'un double levier (27) perpendiculaire à l'élément de boulon ou l'élément d'écrou (25, 26).

4. Statif articulé selon la revendication 1,
**caractérisé en ce que**
le dispositif de déplacement (18) est équipé de préférence de cylindre de tirage ou de cylindre presseur hydraulique ou pneumatique, qui exerce le déplacement axial de serrage ou la force de serrage sur la genouillère (17).

5. Statif articulé selon l'une des revendications précédentes,
**caractérisé en ce que**
les leviers coudés (20, 21) sont placés dans un évidement (22) du bloc d'actionnement (15).

6. Statif articulé selon la revendication 5,
**caractérisé en ce que**
le bloc d'actionnement (15) est équipé au moins d'un boîtier (34) en forme de cuvette et au moins d'un disque presseur (23) s'engrénant de préférence comme un piston dans ce boîtier, ces éléments présentant de préférence une section transversale circulaire dans la direction perpendiculaire à la direction du déplacement du dispositif de déplacement, **en ce que** l'évidement (22) est formé entre le fond du boîtier (34) en forme de cuvette et le disque presseur (23), **en ce que** le disque presseur (23) alimente de préférence directement la genouillère (19), en particulier les rouleaux presseurs (19') placés ici et **en ce que** le dispositif de déplacement (18) peut déplacer le disque presseur (23) dans la direction de l'allongement du levier coudé, l'allongement complet du levier coudé n'étant pas totalement atteint, même dans un état serré.

7. Statif articulé selon l'une des revendications précédentes,
**caractérisé en ce que**
le bloc d'actionnement (15), en particulier le fond du boîtier (34) en forme de cuvette et le disque presseur (23) présente un perçage (24) central s'allongeant, au moins pour l'essentiel, perpendiculairement à la tige de butée (16), ce perçage central étant traversé par un boulon tirant (25) qui représente, utilisé conjointement à un élément d'écrou (26), le dispositif de déplacement (18) permettant d'actionner le mécanisme du levier coudé (17), les leviers coudés (20, 21) étant entraînés autour du boulon tirant (25) qui traverse le perçage central (24), en particulier si l'on prévoit des évidements (43) en forme de demi-cercle dans les côtés droits (20', 21').

8. Statif articulé selon la revendication 7,
**caractérisé en ce que**
une extrémité du filet (25') du boulon tirant (25) fait saillie vers l'extérieur du disque presseur (23) et est vissé sur l'élément d'écrou (26) qui permet, le cas échéant, d'alimenter le disque presseur (23) dans la direction de l'allongement du levier coudé grâce à un arrangement des disques (30) permettant de répartir la pression.

9. Statif articulé selon la revendication 8,
**caractérisé en ce que**
la rotation de l'élément d'écrou (26) s'effectue à l'aide d'un double levier (27) perpendiculaire à l'axe de rotation, placé sur l'élément d'écrou.

10. Statif articulé selon l'une des revendications précédentes,
**caractérisé en ce que**
le bloc d'actionnement (15) est composé de deux moitiés (15', 15'') de préférence identiques, équipées d'évidements (22) se présentant dans des directions opposées, avec respectivement, par rapport au plan de symétrie (35) des deux boîtiers (34), les deux éléments de mâchoire de serrage (11, 11') disposés en formant une image de miroir, les éléments de connexion (14), les tiges de butée (16, 16') et les mécanismes d'entraînement (17), les deux boîtiers (34) et les disques presseurs (23) étant placés de préférence de manière coaxiale l'un par rapport à l'autre.

11. Statif articulé selon la revendication 10,
**caractérisé en ce que**
les fonds des deux boîtiers (34) sont plans et sont en contact le long du plan de symétrie (35).

12. Statif articulé selon la revendication 11,
**caractérisé en ce que**
la surface de contact des deux boîtiers (34) présente une zone d'effilement circulaire, de préférence concentrique par rapport à l'axe (49), en particulier une zone de cône (55, 56).

13. Statif articulé selon la revendication 10,
**caractérisé en ce que**
un revêtement lisse (57) présentant un perçage central (24') est placé entre les fonds des deux boîtiers (34), revêtement présentant de préférence une forme de double effilement, en particulier une forme de cône, et agissant conjointement aux surfaces d'effilement ou de cône (58) complémentaires des deux boîtiers (34).

14. Statif articulé selon la revendication 13,
**caractérisé en ce que**
le revêtement lisse (57) est circulaire et est placé de manière concentrique par rapport à l'axe (49).

15. Statif articulé selon la revendication 13 ou 14,
**caractérisé en ce que**
dans les fonds des boîtiers (34), des évidements (59) sont prévus pour le logement de chaque partie effilée, en particulier conique, du revêtement lisse (57), les surfaces d'effilement ou de cône (58) se trouvant de préférence sur la périphérie du creux (59).

16. Statif articulé selon l'une des revendications 10 à 15,
**caractérisé en ce que**
l'un des éléments de la mâchoire de serrage (11) comporte un dispositif de serre-joint (28), de préférence pour la fixation d'instruments et d'appareils médicaux et l'autre élément de la mâchoire de serrage (11') comporte un raccord fileté (29) de préférence pour la fixation sur un support.

17. Statif articulé selon l'une des revendications précédentes,
**caractérisé en ce que**
l'élément de connexion est un tuyau (14), relié au bloc d'actionnement (15) ou à un élément de la mâchoire de serrage (11, 11') et dans lequel la tige de butée (16, 16') peut être déplacée.

18. Statif articulé selon l'une des revendications 1 à 17,
**caractérisé en ce que**
entre le boîtier (34) et le mécanisme du levier coudé (17), une sécurité antitorsion (31, 32, 33 ; 54, 54') est prévue.

19. Statif articulé selon la revendication 18,
**caractérisé en ce que**
le levier coudé (20) supporté par le bloc d'actionnement (15) présente une goupille de sécurité de rotation (32), essentiellement perpendiculaire à son allongement longitudinal, qui s'intègre dans un évidement longitudinal (33) correspondant, de direction radiale, du boîtier en forme de cuvette (34) et de préférence également dans un évidement longitudinal (31) correspondant, de direction radiale, du disque presseur (23) et empêche ainsi une rotation relative entre le mécanisme du levier coudé (17) et le boîtier et de préférence également le disque presseur (23) ou **en ce qu'**au moins un des disques du levier coudé (20, 21) présente, dans sa périphérie, de préférence dans la zone de la genouillère (19), un méplat (54) qui s'adapte à un méplat inverse (54') correspondant du boîtier (34) .

20. Statif articulé selon l'une des revendications précédentes,
**caractérisé en ce que**
la tige de butée (16) présente, en son extrémité jouxtant le mécanisme du levier coudé (17), une cannelure (36) dans laquelle s'adapte l'extrémité complémentaire (37) du disque de levier coudé (21) affecté.

21. Statif articulé selon l'une des revendications précédentes,
**caractérisé en ce que**
la tige de butée (16) se présente en deux parties et **en ce qu'**une partie (16') de préférence plus courte présente une longueur unitaire et est reliée au mécanisme du levier coudé (17), alors que l'autre partie (16''), de préférence plus longue, qui alimente la mâchoire de serrage (13) se place à plat sur la première partie (16) et est mesurée individuellement, conformément à la longueur totale souhaitée de la tige de butée (16).

22. Statif articulé selon l'une des revendications précédentes,
**caractérisé en ce que**
l'élément de connexion (14) se présentant sous forme de tuyau est équipé d'un filet extérieur (38) sur son extrémité jouxtant l'élément de la mâchoire de serrage (11), filet sur lequel est vissé un écrou de coin (39, 39') auquel s'intègre une fixation de coin (40, 40') traversée par l'élément de connexion (14) se présentant sous forme de tuyau, à partir du côté du bloc d'actionnement (15), fixation de coin sur laquelle est vissé le boîtier (41, 41') logeant l'élément de serrage (12, 12'), boîtier présentant le coussinet (42, 42') du scellement de pivotement de l'élément de serrage (12, 12') et dans lequel la mâchoire de serrage (13, 13') est placée de manière amovible dans le sens du coussinet (42, 42') via la tige de butée (16).
